# EUROPEAN PATENT APPLICATION

(11) **EP 4 793 827 A1**
(43) Date of publication of application: **19.08.2026**
(21) Application number: 24887717.7
(22) Date of filing: 15.10.2024
(51) Int. Cl.: G06N 3/045, G06N 3/08

(54) **COMMUNICATION METHOD AND APPARATUS, AND READABLE STORAGE MEDIUM**

(30) Priority: 06.11.2023 CN 202311464530
(71) Applicant: HUAWEI TECHNOLOGIES CO., LTD., Shenzhen 518129 (CN)
(72) Inventor: WANG, Fei, Shenzhen, Guangdong 518129 (CN); PENG, Chenghui, Shenzhen, Guangdong 518129 (CN); LU, Jiaxun, Shenzhen, Guangdong 518129 (CN); WAN, Shuo, Shenzhen, Guangdong 518129 (CN)
(74) Representative: Pfenning, Meinig & Partner mbB
(86) International application number: PCT/CN2024/124971
(87) International publication number: WO 2025/098104

(57) **Abstract**

This application relates to the field of communication technologies, and in particular, to a communication method, a communication apparatus, and a readable storage medium. The method includes: a first communication apparatus in a mobile communication network sends first information to a second communication apparatus, where a control node of a large model is deployed on the first communication apparatus, a first sub-neural network model among a plurality of sub-neural network models of the large model is deployed on the second communication apparatus, the first information indicates a first operator, the first operator is used to compress service data transmitted by the second communication apparatus to another communication apparatus, and the another communication apparatus has deployed with a sub-neural network model other than the first sub-neural network model among the plurality of sub-neural network models. Embodiments of this application can improve performance of the large model.

## Description

This application claims priority to Chinese Patent Application No. 202311464530.7, filed with the China National Intellectual Property Administration on November 6, 2023 and entitled "COMMUNICATION METHOD, COMMUNICATION APPARATUS, AND READABLE STORAGE MEDIUM", which is incorporated herein by reference in its entirety.

### TECHNICAL FIELD

This application relates to the field of communication technologies, and in particular, to a communication method, a communication apparatus, and a readable storage medium.

### BACKGROUND

In the early stages of artificial intelligence development, the emergence of neural network models, especially convolutional neural networks (convolutional neural network, CNN), enables significant advances in fields such as natural language generation and computer vision. These technologies have gradually been applied to fields such as intelligent customer service, intelligent recommendation, and autonomous driving, providing more convenient and efficient services for the public. Subsequently, the introduction of new neural network models such as generative adversarial networks (generative adversarial network, GAN) and transformers has refined and advanced algorithmic structures and training technologies of large models. As model sizes continue to grow, the emergence of models with hundreds of billions of parameters (such as BERT and GPT) has unlocked unprecedented capabilities of the large models. These large models have been applied across a broader range of domains, including natural language processing, computer vision, and speech recognition. For example, ChatGPT can accurately identify and understand users' speech and text information, providing more intelligent services. This progress has also advanced the vision of inclusive intelligence, enabling more people to benefit from intelligent services.

The rise of large models is reshaping all industries, including mobile communication networks.

At its 44th meeting, the International Telecommunication Union Radiocommunication Sector Working Group 5D (ITU-R WP5D) approved the recommendation on "Framework and Overall Objectives of the Future Development of IMT for 2030 and Beyond". The recommendation identifies "inclusivity" as one of the core scenarios of 6G networks and a key feature that distinguishes 6G networks from 5G networks. The recommendation envisions 6G as an AI-enabled infrastructure capable of supporting intelligent applications as services. It is evident that mobile communication networks will become an integral part of the industry providing large model services, leveraging their characteristics to bring true inclusive intelligence to users.

Currently, the integration of large models with mobile communication networks is still under exploration.

### SUMMARY

Embodiments of this application provide a communication method, a communication apparatus, and a readable storage medium, aiming at improving performance of a large model.

The following describes this application from different aspects. The following implementations and beneficial effects of different aspects may be mutually referenced.

According to a first aspect, this application provides a communication method, applied to a first communication apparatus in a mobile communication network, where a control node of a large model is deployed on the first communication apparatus, the large model further includes a plurality of sub-neural network models, and the plurality of sub-neural network models are respectively deployed on different communication apparatuses in the mobile communication network; and the method includes: sending first information to a second communication apparatus in the mobile communication network, where a first sub-neural network model among the plurality of sub-neural network models is deployed on the second communication apparatus, the first information indicates a first operator, the first operator is used to compress service data transmitted by the second communication apparatus to another communication apparatus, and the another communication apparatus is deployed with a sub-neural network model other than the first sub-neural network model among the plurality of sub-neural network models.

In this embodiment of this application, when a plurality of task execution nodes (TEs, corresponding to sub-neural network models) of the large model are respectively deployed on different communication apparatuses in the mobile communication network, a network side may configure a network affinity operator (that is, the first operator), to compress to-be-transmitted service data between the plurality of task execution nodes, so as to reduce a data magnitude of service data that needs to be transmitted between different task execution nodes, and effectively and timely complete data transmission even when interface bandwidth between the different communication apparatuses is limited, thereby improving performance of the large model.

In a possible implementation, the method further includes:
sending second information to a third communication apparatus in the mobile communication network, where a second sub-neural network model among the plurality of sub-neural network models is deployed on the third communication apparatus, the second information indicates a second operator, and the second operator is used to decompress the service data compressed by using the first operator.

In this embodiment of this application, when configuring an affinity operator for a task execution node (for example, deployed on the second communication apparatus) of the large model, the network side may correspondingly configure a sparse operator (that is, the second operator) for another task execution node (for example, deployed on the third communication apparatus) of the large model. In other words, the network side may configure an affinity operator and a sparse operator as a pair, which are respectively used by the second communication apparatus and the third communication apparatus, so that the third communication apparatus can decompress, by using the sparse operator, service data compressed by using the affinity operator, thereby reducing information loss while improving performance of the large model.

In a possible implementation, the first operator and/or the second operator are/is determined based on a model type and a model splitting point of the large model, or based on a training algorithm.

In this embodiment of this application, the affinity operator and the sparse operator may be determined based on the model type and the model splitting point of the large model, that is, determined based on a specific large model to be deployed and how to perform splitting deployment; or the affinity operator and the sparse operator may be determined after training by using the training algorithm.

In a possible implementation, the method further includes:
sending third information to the second communication apparatus, where the third information includes an initial operator, and the initial operator is used to compress the service data transmitted by the second communication apparatus to the another communication apparatus; and
sending fourth information to the third communication apparatus in the mobile communication network, where the fourth information includes a loss function, and the first operator is obtained based on training of the loss function and the initial operator.

In this embodiment of this application, for a manner in which the affinity operator needs to be determined by using the training algorithm, the network side may first deliver the initial operator to the second communication apparatus, and deliver the loss function used for training to the third communication apparatus. After the initial operator is repeatedly trained and optimized until convergence, the trained affinity operator (for example, the first operator) may be obtained.

In a possible implementation, the method further includes:
sending fifth information to the second communication apparatus, where the fifth information indicates a third operator, the third operator is used to compress the service data transmitted by the second communication apparatus to the another communication apparatus, and a compression ratio of the third operator is different from that of the first operator.

In this embodiment of this application, after delivering the affinity operator to the second communication apparatus, the network side may further reconfigure a new affinity operator for the second communication apparatus based on an actual network status, so as to meet an actual network transmission requirement.

In a possible implementation, the method further includes:
sending sixth information to the third communication apparatus in the mobile communication network, where the sixth information indicates a fourth operator, and the fourth operator is used to decompress the service data compressed by using the third operator.

In this embodiment of this application, when reconfiguring the affinity operator, the network side may also correspondingly reconfigure a sparse operator, to minimize information loss.

In a possible implementation, the method further includes:
sending seventh information to the second communication apparatus, where the seventh information includes first parameter information of the large model, and the seventh information indicates the second communication apparatus to load the first sub-neural network model of the large model based on the first parameter information; and
sending eighth information to the third communication apparatus in the mobile communication network, where the eighth information includes second parameter information of the large model, and the eighth information indicates the third communication apparatus to load the second sub-neural network model of the large model based on the second parameter information.

In this embodiment of this application, after determining a deployment solution of the large model in the mobile communication network, the network side may send indication information to communication apparatuses on which sub-neural network models of the large model need to be deployed, to indicate these communication apparatuses to respectively load the corresponding sub-neural network models, so that these communication apparatuses have a capability of processing a large model service.

According to a second aspect, this application provides a communication method, applied to a second communication apparatus in a mobile communication network, where a first sub-neural network model of a large model is deployed on the second communication apparatus, the large model includes a plurality of sub-neural network models, and the plurality of sub-neural network models are respectively deployed on different communication apparatuses in the mobile communication network; and the method includes:
receiving first information sent by a first communication apparatus in the mobile communication network, where the first information indicates a first operator, the large model further includes a control node, and the control node is deployed on the first communication apparatus;
obtaining first service data, and inputting the first service data into the first sub-neural network model for processing to obtain second service data; and
sending third service data to a third communication apparatus in the mobile communication network, where a second sub-neural network model of the large model is deployed on the third communication apparatus, the third service data is obtained by compressing the second service data based on the first operator, and a data amount of the third service data is less than a data amount of the second service data.

In this embodiment of this application, when a plurality of task execution nodes (TEs, corresponding to sub-neural network models) of the large model are respectively deployed on different communication apparatuses in the mobile communication network, a network side may configure a network affinity operator (that is, the first operator) for the second communication apparatus, so that after processing service data by using a sub-neural network model, the second communication apparatus first compresses a processing result (that is, the second service data) by using the affinity operator, to reduce a data magnitude of to-be-transmitted service data, and then send a compression result (that is, the third service data) to the third communication apparatus, so as to effectively and timely complete data transmission when interface bandwidth between the second communication apparatus and the third communication apparatus is limited, thereby improving performance of the large model.

In a possible implementation, the first operator is determined based on a model type and a model splitting point of the large model, or the first operator is determined by the second communication apparatus and the third communication apparatus based on a training algorithm.

In a possible implementation, the method further includes:
receiving third information sent by the first communication apparatus, where the third information includes an initial operator, the third information indicates the second communication apparatus to train the initial operator, the initial operator is used to compress service data transmitted by the second communication apparatus to another communication apparatus, and the first operator is obtained based on training of the initial operator.

In a possible implementation, that the data amount of the third service data is less than the data amount of the second service data includes: the second service data includes information about M neurons, the third service data includes information about N neurons, the N neurons are part of the M neurons, and N is a positive integer less than M.

In this embodiment of this application, the second communication apparatus may reduce a quantity of neurons and change information distribution on original neurons, to compress the service data by using the affinity operator, so as to transmit only information about some neurons, thereby effectively compressing the to-be-transmitted data.

In a possible implementation, the method further includes:
receiving fifth information sent by the first communication apparatus, where the fifth information indicates a third operator, the third operator is used to compress the service data transmitted by the second communication apparatus to the another communication apparatus, a compression ratio of the third operator is different from that of the first operator, and a change value in a data transmission rate between the second communication apparatus and the third communication apparatus is greater than or equal to a preset threshold.

In this embodiment of this application, when the change value in the data transmission rate between the second communication apparatus and the third communication apparatus is greater than or equal to the preset threshold, the network side may reconfigure a new affinity operator for the second communication apparatus, to adapt to a new data transmission rate and ensure performance of the large model.

In a possible implementation, the method further includes:
receiving seventh information sent by the first communication apparatus, where the seventh information includes first parameter information of the large model; and
loading the first sub-neural network model of the large model based on the first parameter information.

In a possible implementation, the first service data is a service request sent by a terminal device, and a response to the first service data is obtained based on processing of the third service data by using the second sub-neural network model.

In this embodiment of this application, the service data (that is, the service request) of the large model is initiated by the terminal device. After the service request is processed by using the first sub-neural network model and the second sub-neural network, the response may be obtained.

According to a third aspect, this application provides a communication method, applied to a third communication apparatus in a mobile communication network, where a second sub-neural network model of a large model is deployed on the third communication apparatus, the large model includes a plurality of sub-neural network models, and the plurality of sub-neural network models are respectively deployed on different communication apparatuses in the mobile communication network; and the method includes:
receiving second information sent by a first communication apparatus in the mobile communication network, where the second information indicates a second operator, the large model further includes a control node, and the control node is deployed on the first communication apparatus;
receiving third service data sent by a second communication apparatus in the mobile communication network, where a first sub-neural network model of the large model is deployed on the second communication apparatus; and
inputting fourth service data into the second sub-neural network model for processing to obtain fifth service data, and sending the fifth service data, where the fourth service data is obtained by decompressing the third service data based on the second operator, and a data amount of the third service data is less than a data amount of the fourth service data.

In this embodiment of this application, when configuring an affinity operator for a task execution node (for example, deployed on the second communication apparatus) of the large model, the network side may correspondingly configure a sparse operator (that is, the second operator) for another task execution node (for example, deployed on the third communication apparatus) of the large model. In other words, the network side may configure an affinity operator and a sparse operator as a pair, which are respectively used by the second communication apparatus and the third communication apparatus, so that the third communication apparatus can decompress, by using the sparse operator, service data compressed by using the affinity operator, thereby reducing information loss while improving performance of the large model.

In a possible implementation, the second operator is determined based on a model type and a model splitting point of the large model, or the second operator is determined by the first communication apparatus and the second communication apparatus based on a training algorithm.

In a possible implementation, the method further includes:
receiving fourth information sent by the first communication apparatus, where the fourth information includes a loss function, a first operator of the second communication apparatus is obtained based on training of the loss function, and the first operator is used to compress service data transmitted by the second communication apparatus to another communication apparatus.

In a possible implementation, that the data amount of the third service data is less than the data amount of the fourth service data includes: the third service data includes information about N neurons, the fourth service data includes information about K neurons, the N neurons are part of the K neurons, and N is a positive integer less than K.

In this embodiment of this application, the third communication apparatus may redistribute received neuron information to more neurons, to decompress the service data by using the sparse operator, so as to reduce information density that may be caused by compression, and reduce information loss.

In a possible implementation, the method further includes:
receiving sixth information sent by the first communication apparatus, where the sixth information indicates a fourth operator, and the fourth operator is used to decompress service data compressed by using a third operator.

In a possible implementation, the method further includes:
receiving eighth information sent by the first communication apparatus, where the eighth information includes second parameter information of the large model; and
loading the second sub-neural network model of the large model based on the second parameter information.

In a possible implementation, sending the fifth service data includes:
sending the fifth service data to a terminal device, where the fifth service data is a response to a service request initiated by the terminal device.

In this embodiment of this application, if a last task execution node of the large model is deployed on the third communication apparatus, after processing the service data, the third communication apparatus may return a processing result to a communication apparatus (for example, the terminal device) that initiates an inference request as a response to the inference request.

According to a fourth aspect, this application provides a first communication apparatus in a mobile communication network, where a control node of a large model is deployed on the first communication apparatus, the large model further includes a plurality of sub-neural network models, and the plurality of sub-neural network models are respectively deployed on different communication apparatuses in the mobile communication network; and the first communication apparatus includes:
a sending unit, configured to send first information to a second communication apparatus in the mobile communication network, where a first sub-neural network model among the plurality of sub-neural network models is deployed on the second communication apparatus, the first information indicates a first operator, the first operator is used to compress service data transmitted by the second communication apparatus to another communication apparatus, and the another communication apparatus is deployed with a sub-neural network model other than the first sub-neural network model among the plurality of sub-neural network models.

In a possible implementation, the sending unit is further configured to:
send second information to a third communication apparatus in the mobile communication network, where a second sub-neural network model among the plurality of sub-neural network models is deployed on the third communication apparatus, the second information indicates a second operator, and the second operator is used to decompress the service data compressed by using the first operator.

In a possible implementation, the first operator and/or the second operator are/is determined based on a model type and a model splitting point of the large model, or based on a training algorithm.

In a possible implementation, the sending unit is further configured to:
send third information to the second communication apparatus, where the third information includes an initial operator, and the initial operator is used to compress the service data transmitted by the second communication apparatus to the another communication apparatus; and
send fourth information to the third communication apparatus in the mobile communication network, where the fourth information includes a loss function, and the first operator is obtained based on training of the loss function and the initial operator.

In a possible implementation, the sending unit is further configured to:
send fifth information to the second communication apparatus, where the fifth information indicates a third operator, the third operator is used to compress the service data transmitted by the second communication apparatus to the another communication apparatus, and a compression ratio of the third operator is different from that of the first operator.

In a possible implementation, the sending unit is further configured to:
send sixth information to the third communication apparatus in the mobile communication network, where the sixth information indicates a fourth operator, and the fourth operator is used to decompress the service data compressed by using the third operator.

In a possible implementation, the sending unit is further configured to:
send seventh information to the second communication apparatus, where the seventh information includes first parameter information of the large model, and the seventh information indicates the second communication apparatus to load the first sub-neural network model of the large model based on the first parameter information; and
send eighth information to the third communication apparatus in the mobile communication network, where the eighth information includes second parameter information of the large model, and the eighth information indicates the third communication apparatus to load the second sub-neural network model of the large model based on the second parameter information.

According to a fifth aspect, this application provides a second communication apparatus in a mobile communication network, where a first sub-neural network model of a large model is deployed on the second communication apparatus, the large model includes a plurality of sub-neural network models, and the plurality of sub-neural network models are respectively deployed on different communication apparatuses in the mobile communication network; and the second communication apparatus includes:
a receiving unit, configured to receive first information sent by a first communication apparatus in the mobile communication network, where the first information indicates a first operator, the large model further includes a control node, and the control node is deployed on the first communication apparatus;
a processing unit, configured to obtain first service data, and input the first service data into the first sub-neural network model for processing to obtain second service data; and
a sending unit, configured to send third service data to a third communication apparatus in the mobile communication network, where a second sub-neural network model of the large model is deployed on the third communication apparatus, the third service data is obtained by compressing the second service data based on the first operator, and a data amount of the third service data is less than a data amount of the second service data.

In a possible implementation, the first operator is determined based on a model type and a model splitting point of the large model, or the first operator is determined by the second communication apparatus and the third communication apparatus based on a training algorithm.

In a possible implementation, the receiving unit is further configured to:
receive third information sent by the first communication apparatus, where the third information includes an initial operator, the third information indicates the second communication apparatus to train the initial operator, the initial operator is used to compress service data transmitted by the second communication apparatus to another communication apparatus, and the first operator is obtained based on training of the initial operator.

In a possible implementation, that the data amount of the third service data is less than the data amount of the second service data includes: the second service data includes information about M neurons, the third service data includes information about N neurons, the N neurons are part of the M neurons, and N is a positive integer less than M.

In a possible implementation, the receiving unit is further configured to:
receive fifth information sent by the first communication apparatus, where the fifth information indicates a third operator, the third operator is used to compress the service data transmitted by the second communication apparatus to the another communication apparatus, a compression ratio of the third operator is different from that of the first operator, and a change value in a data transmission rate between the second communication apparatus and the third communication apparatus is greater than or equal to a preset threshold.

In a possible implementation, the receiving unit is further configured to:
receive seventh information sent by the first communication apparatus, where the seventh information includes first parameter information of the large model; and
load the first sub-neural network model of the large model based on the first parameter information.

In a possible implementation, the first service data is a service request sent by a terminal device, and a response to the first service data is obtained based on processing of the third service data by using the second sub-neural network model.

According to a sixth aspect, this application provides a third communication apparatus in a mobile communication network, where a second sub-neural network model of a large model is deployed on the third communication apparatus, the large model includes a plurality of sub-neural network models, and the plurality of sub-neural network models are respectively deployed on different communication apparatuses in the mobile communication network; and the third communication apparatus includes:
a receiving unit, configured to receive second information sent by a first communication apparatus in the mobile communication network, where the second information indicates a second operator, the large model further includes a control node, and the control node is deployed on the first communication apparatus, where
the receiving unit is further configured to receive third service data sent by a second communication apparatus in the mobile communication network, where a first sub-neural network model of the large model is deployed on the second communication apparatus;
a processing unit, configured to input fourth service data into the second sub-neural network model for processing to obtain fifth service data; and
a sending unit, configured to send the fifth service data, where the fourth service data is obtained by decompressing the third service data based on the second operator, and a data amount of the third service data is less than a data amount of the fourth service data.

In a possible implementation, the second operator is determined based on a model type and a model splitting point of the large model, or the second operator is determined by the first communication apparatus and the second communication apparatus based on a training algorithm.

In a possible implementation, the receiving unit is further configured to:
receive fourth information sent by the first communication apparatus, where the fourth information includes a loss function, a first operator of the second communication apparatus is obtained based on training of the loss function, and the first operator is used to compress service data transmitted by the second communication apparatus to another communication apparatus.

In a possible implementation, that the data amount of the third service data is less than the data amount of the fourth service data includes: the third service data includes information about N neurons, the fourth service data includes information about K neurons, the N neurons are part of the K neurons, and N is a positive integer less than K.

In a possible implementation, the receiving unit is further configured to:
receive sixth information sent by the first communication apparatus, where the sixth information indicates a fourth operator, and the fourth operator is used to decompress service data compressed by using a third operator.

In a possible implementation, the receiving unit is further configured to:
receive eighth information sent by the first communication apparatus, where the eighth information includes second parameter information of the large model; and
load the second sub-neural network model of the large model based on the second parameter information.

In a possible implementation, the sending unit is specifically configured to:
send the fifth service data to a terminal device, where the fifth service data is a response to a service request initiated by the terminal device.

According to a seventh aspect, this application provides a communication apparatus. The communication apparatus may include a processor, a transceiver, and a memory. The memory is configured to store a computer program. The transceiver is configured to receive and send various messages. The computer program includes program instructions. When the processor runs the program instructions, the communication apparatus is enabled to perform the method described in any one of the first aspect to the third aspect or any possible implementation in any one of the first aspect to the third aspect. The transceiver may be a radio frequency module in the communication apparatus, a combination of a radio frequency module and an antenna, or an input/output interface of a chip or a circuit.

According to an eighth aspect, this application provides a computer-readable storage medium. The computer-readable storage medium stores program instructions. When the program instructions are run on a computer, the computer is enabled to perform the method described in any one of the first aspect to the third aspect or any possible implementation in any one of the first aspect to the third aspect.

According to a ninth aspect, this application provides a program product including program instructions. When the program product runs, the method described in any one of the first aspect to the third aspect or any possible implementation in any one of the first aspect to the third aspect is performed.

According to a tenth aspect, this application provides a communication apparatus. The communication apparatus may be implemented in a form of a chip, or may be implemented in a form of a device, a component in the device, or the like. The apparatus includes a processor. The processor is configured to read and execute a program stored in a memory, to perform the communication method provided in any one of the first aspect to the third aspect or any one or more of the possible implementations in any one of the first aspect to the third aspect. Optionally, the communication apparatus further includes the memory, and the memory is connected to the processor by using a circuit. Further optionally, the communication apparatus further includes a communication interface, and the processor is connected to the communication interface. The communication interface is configured to receive a to-be-processed data packet and/or to-be-processed information. The processor obtains the data packet and/or the information from the communication interface, processes the data packet and/or the information, and outputs a processing result through the communication interface. The communication interface may be an input/output interface.

Optionally, the processor and the memory may be physically independent units, or the memory may be integrated with the processor.

According to an eleventh aspect, this application provides a mobile communication system, where the mobile communication system includes a first communication apparatus, a second communication apparatus, and a third communication apparatus, where the first communication apparatus is configured to perform the method described in any one of the first aspect or the possible implementations of the first aspect, the second communication apparatus is configured to perform the method described in any one of the second aspect or the possible implementations of the second aspect, and the second communication apparatus is configured to perform the method described in any one of the third aspect or the possible implementations of the third aspect.

For technical effects achieved in the foregoing aspects, mutual reference may be made, or reference may be made to beneficial effects in the following method embodiments. Details are not described herein.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a diagram of an architecture of a scenario to which a communication method may be applied according to an embodiment of this application;
FIG. 2a is a diagram of an architecture of a communication system according to an embodiment of this application;
FIG. 2b is a diagram of a sidelink UE-to-network relay scenario according to an embodiment of this application;
FIG. 2c is a diagram of a sidelink UE-to-UE relay scenario according to an embodiment of this application;
FIG. 3 is a simplified diagram of structures of a UE and a base station according to an embodiment of this application;
FIG. 4 is a diagram of a structure combining a large model and a mobile communication network;
FIG. 5a is a schematic flowchart of a communication method according to an embodiment of this application;
FIG. 5b is a diagram of an affinity operator compression principle according to an embodiment of this application;
FIG. 5c is a diagram of a structure of large model splitting according to an embodiment of this application;
FIG. 6a is a schematic flowchart of an affinity operator training method according to an embodiment of this application;
FIG. 6b is a diagram of a data processing procedure of affinity operator training according to an embodiment of this application;
FIG. 7a is a schematic flowchart of another communication method according to an embodiment of this application;
FIG. 7b is a diagram of a sparse operator decompression principle according to an embodiment of this application;
FIG. 8a(1) and FIG. 8a(2) are a schematic flowchart of an operator pair training method according to an embodiment of this application;
FIG. 8b is a diagram of a data processing procedure of operator pair training according to an embodiment of this application;
FIG. 9 is a diagram of a structure of a communication apparatus according to an embodiment of this application;
FIG. 10 is a diagram of a structure of another communication apparatus according to an embodiment of this application; and
FIG. 11 is a diagram of a structure of still another communication apparatus according to an embodiment of this application.

### DESCRIPTION OF EMBODIMENTS

The following clearly and completely describes the technical solutions in embodiments of this application with reference to the accompanying drawings in embodiments of this application.

In descriptions of this application, the terms such as "first" and "second" are merely used to distinguish between different objects, and do not limit a quantity and an execution sequence. In addition, the terms such as "first" and "second" do not indicate a definite difference. For example, a first message and a second message are merely used to distinguish between different information, and do not limit a sequence of the first message and the second message. In addition, the terms such as "include" and "have" and any other variants thereof are intended to cover a non-exclusive inclusion. For example, processes, methods, systems, products, or devices that include a series of steps or units are not limited to listed steps or units, but optionally further include steps or units that are not listed, or optionally further include other steps or units inherent to these processes, methods, products, or devices.

In descriptions of this application, unless otherwise specified, "/" means "or". For example, A/B may indicate A or B. The term "and/or" in this specification describes only an association relationship between associated objects and indicates that there may be three relationships. For example, A and/or B may represent the following three cases: Only A exists, both A and B exist, and only B exists. In addition, "at least one item (piece)", "one or more of the following items (pieces)", or a similar expression thereof indicates any combination of these items, including a singular item (piece) or any combination of plural items (pieces). For example, at least one of a, b, or c may represent a, b, c, a and b, a and c, b and c, or a, b, and c, where a, b, and c each may be singular or plural.

In descriptions of this application, terms such as "example" or "for example" are used to represent giving an example, an illustration, or a description. Any embodiment or design scheme described as "example", "such as", or "for example" in this application should not be explained as being more preferred or having more advantages than another embodiment or design scheme. Exactly, use of the term such as "example", "such as", or "for example" is intended to present a related concept in a specific manner.

In descriptions of this application, both "when" and "if" mean that an apparatus performs corresponding processing in an objective situation, are not intended to limit time, do not require the apparatus to necessarily have a determining action during implementation, and do not mean another limitation.

"Simultaneously" in this application may be understood as being at a same time point, may be understood as being in a period of time, or may be understood as being in a same periodicity, and may be specifically understood with reference to a context.

In this application, unless otherwise specified, an element indicated in a singular form is intended to indicate "one or more", but does not indicate "one and only one".

In addition, the terms "system" and "network" may be used interchangeably in this specification.

In embodiments of this application, "A corresponds to B" indicates that B is associated with A, and B may be determined based on A. Determining B based on A does not mean that B is determined based only on A, and B may alternatively be determined based on A and/or other information.

In embodiments of this application, "indicating" and "indication" may include a direct indication and an indirect indication, or may include an explicit indication and an implicit indication. The description "specific indication information indicates A" or "indication information of A" may include that the indication information directly indicates A or indirectly indicates A, but does not mean that the indication information definitely carries A. Information indicated by specific information is referred to as to-be-indicated information. In a specific implementation process, the to-be-indicated information may be indicated in a plurality of manners. By way of example but not limitation, the to-be-indicated information may be directly indicated, for example, by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information. Furthermore, specific indication manners may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending information to a receive end device. For example, the information may include, but is not limited to, one or a combination of at least two of radio resource control signaling, MAC layer signaling, and physical layer signaling.

The technical solutions in embodiments of this application may be applied to various communication systems, for example, a universal mobile telecommunications system (universal mobile telecommunications system, UMTS), which is also referred to as a 3rd generation (3G) system, a long term evolution (long term evolution, LTE) system, which is also referred to as a 4th generation (4G) system, a worldwide interoperability for microwave access (worldwide interoperability for microwave access, WiMAX) communication system, a 5th generation (5th generation, 5G) system, such as a new generation radio access technology (new radio, NR), a network integrating a plurality of systems, an internet of things system, an internet of vehicles system, and a future communication system, such as a 6G system. The technical solutions in embodiments of this application may be further applied to an open access network (open RAN, O-RAN or ORAN), a cloud radio access network (cloud radio access network, CRAN), or a communication network including two or more of the foregoing networks.

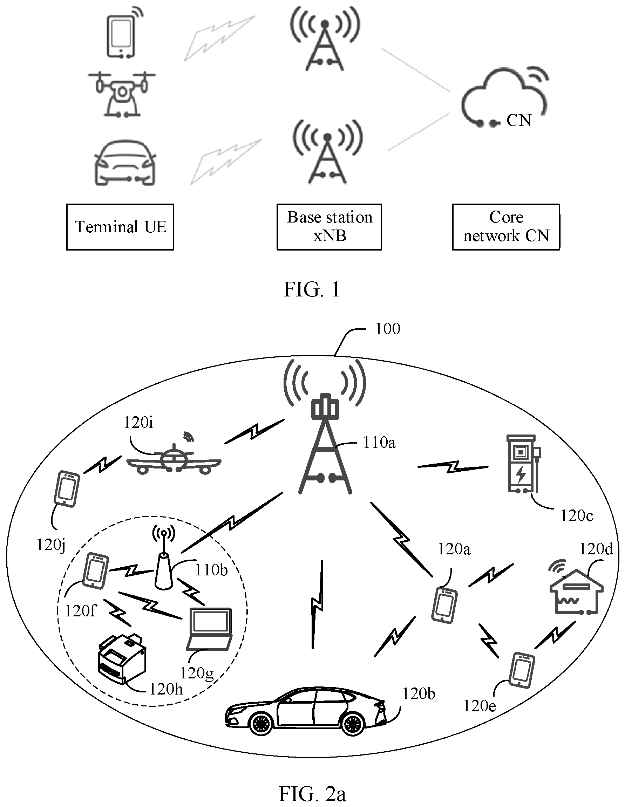

For example, FIG. 1 is a diagram of an architecture of a scenario to which a communication method may be applied according to an embodiment of this application. As shown in FIG. 1, the architecture may include a terminal device (user equipment, UE), a radio access network device (for example, a base station xNB), and a core network (core network, CN) device.

A core network mainly has functions of providing a user connection, user management, and a service bearer, and the core network may function as a bearer network to provide an interface to an external network. Using a 5G core network as an example, the core network may include network elements such as a user plane function (user plane function, UPF) network element, an access and mobility management function (access and mobility management function, AMF) network element, and a session management function (session management function, SMF) network element, or may include another network element (not shown in FIG. 1) used for slicing, authentication, charging, or policy management. In embodiments of this application, a control node of a large model may be deployed on an existing network element in the core network, or may be deployed on a network element independently established in the core network, so that the network element can control deployment and running of the large model. Specifically, the network element on which the control node of the large model is deployed may configure an affinity operator for another communication apparatus on which a task execution node of the large model is deployed, so that the communication apparatus can compress to-be-transmitted service data between different communication apparatuses by using the affinity operator, thereby improving performance of the large model. Further, the network element may further configure a sparse operator for a communication apparatus on which another task execution node of the large model is deployed, so that the communication apparatus can decompress, by using the sparse operator, the data compressed by using the affinity operator, thereby reducing information loss. Optionally, the control node of the large model may alternatively be deployed on the radio access network device or the terminal device, provided that capabilities of these devices allow for deployment of the control node. Even the control node of the large model may be deployed together with a task execution node on a communication apparatus. In this application, only an example in which the control node is deployed on a core network element is used for description, and does not constitute a limitation on this application.

In the foregoing architecture, the core network may be a 5G core network, a 4G core network, a 6G core network, or a core network in another future network. This is not specifically limited herein. Each network element may also be referred to as a functional entity, and may be a network element implemented on dedicated hardware, a software instance running on dedicated hardware, or an instance of a virtualization function on an appropriate platform. For example, the virtualization platform may be a cloud platform. Different network elements or devices may communicate with each other through interfaces.

For architecture between a radio access network device and a terminal device in embodiments of this application, refer to an example in FIG. 2a. FIG. 2a is a diagram of an architecture of a communication system according to an embodiment of this application. The communication system includes a radio access network 100. The radio access network 100 may include at least one radio access network device (for example, 110a and 110b in FIG. 2a), and the radio access network 100 may further include at least one terminal device (for example, 120a to 120j in FIG. 2a). The terminal device may be connected to the radio access network device in a wireless manner. Terminal devices may be connected to each other in a wired or wireless manner, and radio access network devices may be connected to each other in a wired or wireless manner. The architecture of the communication system in FIG. 2a is merely an example. The communication system may further include another network device, for example, a wireless relay device and a wireless backhaul device, which are not shown in FIG. 2a.

The radio access network device is an access device in the communication system that the terminal accesses in a wireless manner, and is mainly responsible for all functions related to an air interface, for example, a radio link maintenance function, including maintaining a radio link with the terminal, and protocol conversion for quality monitoring between radio link data and IP data; a radio resource management function, including radio link establishment and release, radio resource scheduling and allocation, and the like; and some mobility management functions, including configuring the terminal to perform measurement, evaluating radio link quality of the terminal, and determining a handover of the terminal between cells. In embodiments of this application, a plurality of task execution nodes (or referred to as sub-neural network models) of a large model may be respectively deployed on different radio access network devices (for example, 110a and 110b in FIG. 2a), so that these access network devices can have functions of the task execution nodes of the large model, and therefore can process service data of the large model. Further, these access network devices may obtain indication information of an affinity operator from a core network element side on which a control node of the large model is deployed, and then may first compress, by using the affinity operator, to-be-transmitted service data between different task execution nodes, and then transmit a compression result, thereby improving performance of the large model. Optionally, the task execution nodes of the large model may alternatively be deployed on various network elements or terminal devices in the core network, provided that capabilities of these devices allow for deployment of the task execution nodes. Even the control node of the large model may be deployed together with a task execution node on a communication apparatus. In this application, only an example in which the plurality of task execution nodes are respectively deployed on different access network devices is used for description, and does not constitute a limitation on this application.

The radio access network device may be a base station (base station, BS), an evolved NodeB (evolved NodeB, eNodeB, eNB for short), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a wireless fidelity (wireless fidelity, Wi-Fi) system, or the like; or may be a module or a unit that completes some functions of the base station, for example, may be a central unit (central unit, CU), or may be a distributed unit (distributed unit, DU), or may be a radio unit (radio unit, RU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete some or all of functions of a physical layer. For specific descriptions of the foregoing protocol layers, refer to technical specifications related to the 3rd generation partnership project (3^{rd} generation partnership project, 3GPP). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may alternatively have different names, but a person skilled in the art may understand meanings thereof. For example, in an ORAN system, a CU may also be referred to as an O-CU (open CU), a DU may also be referred to as an O-DU, and an RU may also be referred to as an O-RU. Any one of the CU (or a CU-CP and a CU-UP), the DU, and the RU in this application may be implemented by a software module, a hardware module, or a combination of a software module and a hardware module. The radio access network device may be a macro base station (for example, 110a in FIG. 2a), or may be a micro base station or an indoor base station (for example, 110b in FIG. 2a), or may be a relay node or a donor node. A specific technology and a specific device form that are used by the radio access network device are not limited in embodiments of this application.

In embodiments of this application, the radio access network device may be an apparatus configured to implement a function of the radio access network device, or may be an apparatus that can support the radio access network device in implementing the function, for example, a chip system, a communication module, or a modem. The apparatus may be installed in the radio access network device. In the technical solutions provided in embodiments of this application, the technical solutions provided in embodiments of this application are described by using an example in which the apparatus configured to implement the function of the radio access network device is a radio access network device and the radio access network device is a base station. The base station may support networks using a same access technology or different access technologies. A specific technology and a specific device form that are used by the radio access network device are not limited in embodiments of this application.

The terminal device is a device having a wireless transceiver function, and may send a signal to the base station, or receive a signal from the base station. The terminal device may also be referred to as a terminal, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, and smart city. The terminal may be a mobile phone, a tablet computer, a computer with a wireless transceiver function, a wearable device, a vehicle, an airplane, a ship, a robot, a robotic arm, a smart home device, a train detector, a gas station sensor, or the like. A specific technology and a specific device form that are used by the terminal are not limited in embodiments of this application. A physical device and a mobile user may be completely independent, all information related to the mobile user may be stored in a smart card (for example, a SIM card), and the smart card may be used on the physical device. In embodiments of this application, the terminal device side may be configured to initiate a service request (for example, an inference request) for a large model, and then a plurality of task execution nodes of the large model process the service request, and finally return a service result to the terminal device. In a service data transmission process, compression of an affinity operator is involved, to ensure performance of the large model. Further, in a service data transmission process, decompression of a sparse operator may be involved, to reduce information loss. Optionally, if a capability of the terminal device is sufficient, a task execution node and/or a control node of the large model may also be deployed on the terminal device. In this application, an example in which the terminal device is an initiator of the service request of the large model and no task node or control node of the large model is deployed is used for description, and does not constitute a limitation on this application.

In embodiments of this application, an apparatus configured to implement a function of the terminal may be a terminal, or may be an apparatus that can support the terminal in implementing the function, for example, a chip system, a communication module, or a modem. The apparatus may be installed in the terminal. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal is a terminal and the terminal is UE. A specific technology and a specific device form that are used by the terminal device are not limited in embodiments of this application.

In the communication system shown in FIG. 2a, the base station and the terminal may be fixed or mobile. The base station and the terminal may be deployed on land, including an indoor or outdoor device, a handheld device, or a vehicle-mounted device, or may be deployed on water, or may be deployed on an airplane, a balloon, or an artificial satellite. Application scenarios of the base station and the terminal are not limited in embodiments of this application. In addition, roles of the base station and the terminal may be relative. For example, the helicopter or uncrewed aerial vehicle 120i in FIG. 2a may be configured as a mobile base station. For the terminal 120j accessing the radio access network 100 via 120i, the terminal 120i is a base station. However, for the base station 110a, 120i is a terminal. In other words, communication between 110a and 120i is performed according to a radio air interface protocol. Certainly, communication between 110a and 120i may alternatively be performed according to an interface protocol between base stations. In this case, for 110a, 120i is also a base station. Therefore, the base station and the terminal may be collectively referred to as a communication apparatus, 110a and 110b in FIG. 2a may be referred to as a communication apparatus having a function of the base station, and 120a to 120j in FIG. 2a may be referred to as a communication apparatus having a function of the terminal. Similarly, the network element of the core network may also be referred to as a communication apparatus, that is, a communication apparatus having a specific function of the core network.

Communication between the base station and the terminal, between base stations, or between terminals may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz.

In some scenarios, the UE may alternatively be configured to act as a base station. For example, the UE may act as a scheduling entity that provides a sidelink signal between UEs in vehicle-to-everything (vehicle-to-everything, V2X), device-to-device (device-to-device, D2D), or peer-to-peer (peer-to-peer, P2P). In some scenarios, the UE may alternatively be configured to act as a relay node. For example, the UE may act as a relay device (relay) or an integrated access and backhaul (integrated access and backhaul, IAB) node, and is configured to provide a wireless backhaul service for the terminal device.

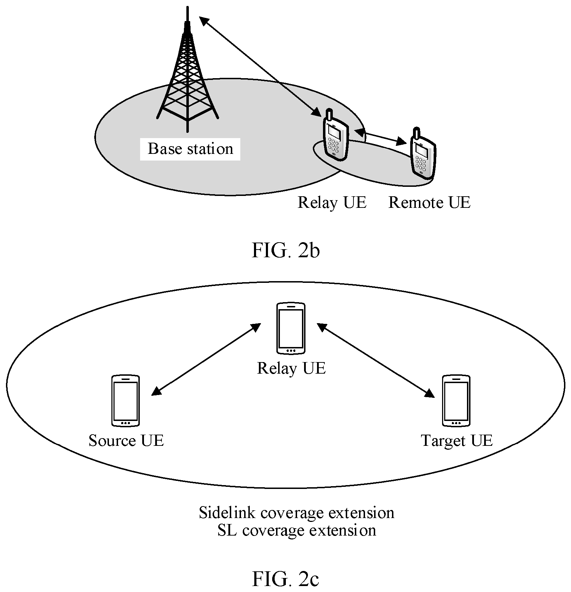

A method provided in this application may be applied to a V2X scenario (for example, the foregoing scenario of communication between 120a and 120b in FIG. 2a), and may be further applied to a sidelink UE-to-network relay (Sidelink UE-to-Network Relay) scenario and a sidelink UE-to-UE relay (Sidelink UE-to-UE Relay) scenario. FIG. 2b is a diagram of a sidelink UE-to-network relay scenario according to an embodiment of this application. As shown in FIG. 2b, the sidelink UE-to-network relay scenario includes remote UE (remote UE) and relay UE (relay UE), and further includes a base station. The method provided in this application may be applied to communication between the remote UE and the relay UE. FIG. 2c is a diagram of a sidelink UE-to-UE relay scenario according to an embodiment of this application. As shown in FIG. 2c, the sidelink UE-to-UE relay scenario includes source UE (source UE), relay UE (relay UE), and target UE (target UE). The method provided in this application may be applied to communication between the source UE and the relay UE and/or communication between the relay UE and the target UE.

The applicable scenario architecture and communication system architecture described in embodiments of this application are intended to describe the technical solutions in embodiments of this application more clearly, and do not constitute a limitation on the technical solutions provided in embodiments of this application. A person of ordinary skill in the art may know that, as a network architecture evolves, the technical solutions provided in embodiments of this application are also applicable to a similar technical problem.

In embodiments of this application, the term "wireless communication" may also be referred to as "communication" for short, and the term "communication" may also be described as "data transmission", "information transmission", or "transmission".

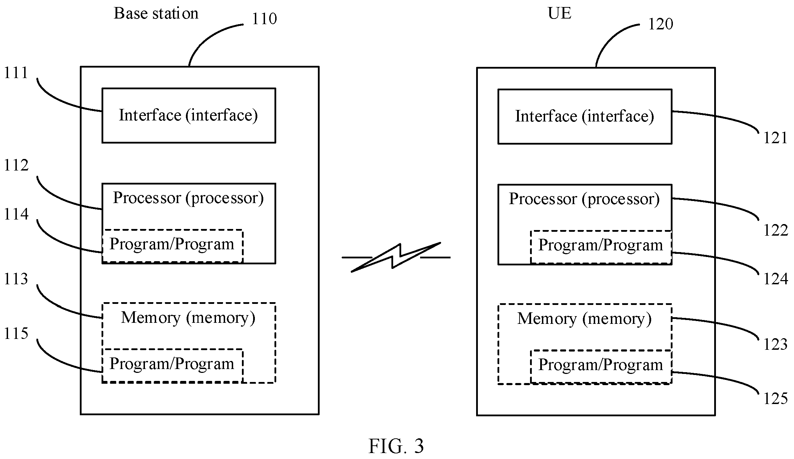

FIG. 3 is a simplified diagram of structures of a UE and a base station according to an embodiment of this application. For simplicity, FIG. 3 shows only main components in a base station 110 (which may correspond to 110a and 110b in FIG. 2a) and UE 120 (which may correspond to 120a to 120j in FIG. 2a). In actual application, the structures of the base station and the UE may include more components than those shown in FIG. 3, or may include fewer components than those shown in FIG. 3, or may include only the components shown in FIG. 3. It should be understood that the base station shown in FIG. 3 may have a CU-DU split architecture, or may have a non-CU-DU split architecture. For a simplified structure of a device on a core network side, refer to the structures of the base station and the UE. Details are not described again. The following briefly describes the components in FIG. 3 separately.

The base station 110 includes an interface 111 and a processor 112. Optionally, the processor 112 may store a program 114. Optionally, the base station 110 may include a memory 113. Optionally, the memory 113 may store a program 115. The UE 120 includes an interface 121 and a processor 122. Optionally, the processor 122 may store a program 124. Optionally, the UE 120 may include a memory 123. Optionally, the memory 123 may store a program 125. These components work together to provide various functions described in this application. For example, the processor 112 and the interface 111 work together to provide a wireless connection between the base station 110 and the UE 120. The processor 122 and the interface 121 work together to implement downlink transmission and/or uplink transmission of the UE 120.

The processor (for example, the processor 112 and/or the processor 122) may include one or more processors and is implemented as a combination of compute devices. The processor (for example, the processor 112 and/or the processor 122) may separately include one or more of the following: a microprocessor, a microcontroller, a digital signal processor (digital signal processor, DSP), a digital signal processor device (DSP device, DSPD), an application-specific integrated circuit (application-specific integrated circuit, ASIC), a field programmable gate array (field programmable gate array, FPGA), a programmable logic device (programmable logic device, PLD), gating logic, transistor logic, a discrete hardware circuit, a processing circuit, other appropriate hardware or firmware, and/or a combination of hardware and software, and is configured to perform various functions described in this application. The processor (for example, the processor 112 and/or the processor 122) may be a general-purpose processor or a dedicated processor. For example, the processor 112 and/or the processor 122 may be a baseband processor or a central processing unit. The baseband processor may be configured to process a communication protocol and communication data. The central processing unit may be configured to enable the base station 110 and/or the UE 120 to execute a software program and process data in the software program.

The interface (for example, the interface 111 and/or 121) may include an interface configured to implement communication with one or more computer devices (for example, UEs, BSs, and/or network nodes). In some embodiments, the interface may include a wire for coupling a wired connection, or a pin for coupling a wireless transceiver, or a chip and/or a pin for a wireless connection. In some embodiments, the interface may include a transmitter, a receiver, a transceiver, and/or an antenna. The interface may be configured to use any available protocol (such as the 3GPP standard).

The program in this application may represent software in a broad sense. A non-limiting example of the software is program code, a program, a subprogram, an instruction, an instruction set, code, a code segment, a software module, an application program, or a software application program. The program may run in a processor and/or a computer, so that the base station 110 and/or the UE 120 perform various functions and/or processes described in this application.

The memory (for example, the memory 113 and/or the memory 123) may store data manipulated by the processors 112 and 122 when executing the software. The memories 113 and 123 may be implemented by using any storage technology. For example, the memory may be any available storage medium that can be accessed by the processor and/or the computer. A non-limiting example of the storage medium includes a RAM, a ROM, an EEPROM, a CD-ROM, a removable medium, an optical disc memory, a magnetic disk storage medium, a magnetic storage device, a flash memory, a register, a state memory, a remote mounted memory, a local or remote storage component, or any other medium that can carry or store software, data, or information and accessible by a processor/computer.

The memory (for example, the memory 113 and/or the memory 123) and the processor (for example, the processor 112 and/or the processor 122) may be separately disposed or integrated. The memory may be configured to be connected to the processor, so that the processor can read information from the memory, and store information in and/or write information into the memory. The memory 113 may be integrated into the processor 112. The memory 123 may be integrated into the processor 122. The processor (for example, the processor 112 and/or the processor 122) and the memory (for example, the memory 113 and/or the memory 123) may be disposed in an integrated circuit (for example, the integrated circuit may be disposed in the UE, the base station, or another network node).

Optionally, the components in the base station 110 and the UE 120 may alternatively exist in a form of various interactive modules, for example, a radio resource control (radio resource control, RRC) signaling interactive module, that is, a module used by the base station 110 and the UE 120 to send and receive RRC signaling; a MAC signaling interactive module, that is, a module used by the base station 110 and the UE 120 to send and receive medium access control control element (medium access control control element, MAC-CE) signaling; and a PHY signaling and data interactive module, that is, a module used by the base station 110 and the UE 120 to send and receive uplink/downlink control signaling and uplink/downlink data.

The foregoing content describes the architecture of the communication system to which embodiments of this application can be applied. To better understand the technical solutions in embodiments of this application, the following briefly describes several terms or nouns related to this application, to facilitate understanding by a person skilled in the art.

### 1. Large model

The large model is a machine learning model with a large quantity of parameters and a complex structure, and is generally a deep neural network with more than 1 billion parameters. The large model can process massive data and complete various complex tasks, such as natural language processing, computer vision, and speech recognition. Natural language processing may include machine translation, text generation, a language model, and the like. Computer vision may include image classification, target detection, image generation, and the like. Speech recognition may include speech-to-text conversion, speech recognition, and the like. This application can resolve a problem that overall performance of a large model is severely limited when a plurality of nodes (or referred to as neural network models, such as a first sub-neural network model and a second sub-neural network model) in the large model that are configured to execute a task are respectively deployed on different communication apparatuses in a mobile communication network, so that these communication apparatuses can process a service of the large model.

### 2. Large language model (large language model, LLM)

Currently, common large models are large language models, such as Llama and ChatGPT. The large language model may understand and generate a human language by learning a large amount of text data, and is usually characterized by a large quantity of layers, a large quantity of parameters, a large amount of training data, and the like. Essentially, the large language model is a probability-based autoregressive model (autoregressive model, AR model), and the AR model generates text by predicting a next token (token) in a text sequence. During training, the model processes an input sequence token by token, and predicts probability distribution of a next token. During generation, the model generates new tokens step by step based on a context and generated tokens until the entire text sequence is completed. The key of the large language model includes text semantic representation based on word embeddings, an attention mechanism-based transformers (such as Transformer), and self-supervised learning based on prediction of a next word. For ease of understanding, in this application, an example in which the large model is a large language model is used to describe a communication method and a processing procedure related to a combination of the large model and a mobile communication network in this application. The large model in this application may be a large language model, or may be another large-scale model.

### 3. Queries-per-second (queries-per-second, QPS)

Queries-per-second indicates an amount of requested data (for generating an inference result) processed per unit of computing resources per unit of time. In a large model scenario, an increase in QPS means an increase in a large model inference speed, which can provide services for more users or reduce model inference costs.

### 4. Encoder (encoder) and decoder (decoder) in a large language model

The encoder (encoder) and the decoder (decoder) are usually neural network models, and differences between the encoder and the decoder lie in their inputs, outputs, and functions. In simple terms, the encoder is configured to encode input information, and the decoder is configured to generate output information; and the encoder is responsible for transforming an input (input) into features (feature), and the decoder is responsible for transforming features into a target (target) and outputting the target. Specifically, the encoder takes an input sequence as an input, and outputs hidden vector representation at each location, and the decoder takes an output of the encoder and a previously generated partial output sequence as an input, and outputs a generated word at a next location.

### 5. Operator (operator)

The operator, also referred to as an operator, is a mapping from one function space to another. Further, the operator may be generalized to any space, such as an inner product space. In a broad sense, any operation performed on any function may be considered as an operation of an operator. For example, finding a power and taking a square root may both be considered as operations of an operator. For example, in a network model, an operator corresponds to computational logic in a layer. For example, a convolutional layer is an operator, and a weight summation process in a fully connected layer is an operator. Corresponding to the operator, an object being operated on is generally referred to as an operand. Common operators include differential operators, gradient operators, and divergence operators. In embodiments of this application, to resolve a problem of performance deterioration when different task execution nodes of a large model are deployed on different communication apparatuses, a network side may configure an affinity operator for a previous communication apparatus, to compress to-be-transmitted service data between the different communication apparatuses, thereby improving performance of the large model. Further, to resolve a problem in some scenarios that information loss is caused because information distribution changes and density occurs after the service data is compressed by using the affinity operator, the network side may configure a sparse operator for a next communication apparatus, to decompress the service data compressed by using the affinity operator, thereby reducing information loss.

### 6. Forward propagation (Forward Propagation) and back propagation (Back Propagation)

Forward propagation is a process of transferring information from an input layer to an output layer in a neural network. Specifically, during forward propagation, an output of an upper layer is used as an input of a lower layer, and an output of the lower layer is calculated until the output layer is calculated. In this application, forward propagation is mainly a service data processing process performed by a task execution node, for example, service data processing performed by a first sub-neural network model in a second communication apparatus and service data processing performed by a second sub-neural network model in a third communication apparatus.

Back propagation is a method for calculating a gradient of each layer of parameters in the neural network. Generally, a chain rule is used to calculate a partial derivative of a loss function with respect to a weight and a bias of each neuron layer by layer, to form a gradient of the loss function with respect to the weight and bias vectors, which is used as the basis for modifying the weight. In this application, back propagation is mainly used to perform gradient feedback during training of an affinity operator and/or a sparse operator. For example, the third communication apparatus feeds back a gradient calculation result to the second communication apparatus.

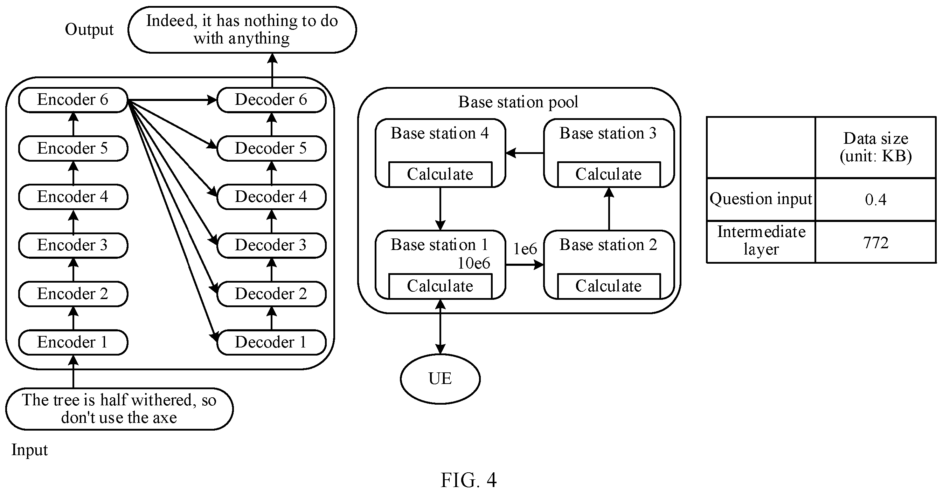

Currently, a large model is primarily deployed on a server in a data center, but there is still no research on deploying the large model in a mobile communication network, that is, there is no solution for combining the large model and the mobile communication network. The applicant makes some attempts to combine the large model and the mobile communication network. Considering that the large model has a large volume, if the large model is deployed in the mobile communication network to combine the large model and the mobile communication network, the large model may be split into a plurality of task execution nodes, and then these task execution nodes are respectively deployed on different communication apparatuses in the mobile communication network, so that these communication apparatuses have a capability of processing a large model service. As shown in FIG. 4, an example in which the large model is a large language model based on a transformer (transformer) is used. The model may include two types of transformer blocks (transformer block): an encoder (encoder) and a decoder (decoder). A quantity of transformer blocks of each type is 6 (for example, encoders 1 to 6 and decoders 1 to 6). For example, different transformer blocks are deployed on different base stations. For example, the encoders 1 to 3 are deployed on a base station 1, and the encoders 4 to 6 are deployed on a base station 2; and the decoders 1 to 6 may be deployed on a base station 3 and a base station 4. After service data of the large model from UE is input into a previous block (the base station 1, for example, corresponding to the encoders 1 to 3) for processing, because the block outputs data in a fully connected layer, which has a large data dimension, an amount of data that needs to be transmitted to a next block (the base station 2, for example, corresponding to the encoders 4 to 6) increases by many times. For example, as shown in FIG. 4, an amount of data of problem input from the UE is only 0.4 KB, but the amount of data becomes 772 KB when being transmitted in an intermediate layer (between the base station 1 and the base station 2), which nearly increases by 2000 times. In an actual service scenario, a size of service data from the UE is usually larger, and therefore an amount of data that needs to be transmitted after the increase in the intermediate layer is even larger (even reaching a magnitude of 10e6). However, because bandwidth of an x2 interface between base stations is severely insufficient, a final inference capacity (for example, QPS) of the large model is limited to a magnitude of 1e6, which seriously reduces performance of the large model.

Therefore, this application provides a communication method, a communication apparatus, and a readable storage medium. When a plurality of task execution nodes (TEs, corresponding to one or more blocks) of a large model are respectively deployed on different communication apparatuses in a mobile communication network, a network side may configure a network affinity operator (that is, a first operator), to compress to-be-transmitted service data between the plurality of task execution nodes, so as to reduce a data magnitude of service data that needs to be transmitted between different task execution nodes, and effectively and timely complete data transmission even when interface bandwidth between the different communication apparatuses is limited, thereby improving performance of the large model.

The following describes the technical solutions provided in this application with reference to more accompanying drawings.

In this application, unless otherwise specified, for same or similar parts in embodiments or implementations, refer to each other. In embodiments of this application and the implementations/implementation methods/feasible methods in embodiments, unless otherwise specified or a logical conflict occurs, terms and/or descriptions are consistent and may be mutually referenced between different embodiments and between the implementations/implementation methods/feasible methods in embodiments. Technical features in the different embodiments and the implementations/implementation methods/feasible methods in embodiments may be combined to form a new embodiment, implementation, or implementation method, or feasible method based on an internal logical relationship thereof. The following implementations of this application are not intended to limit the protection scope of this application.

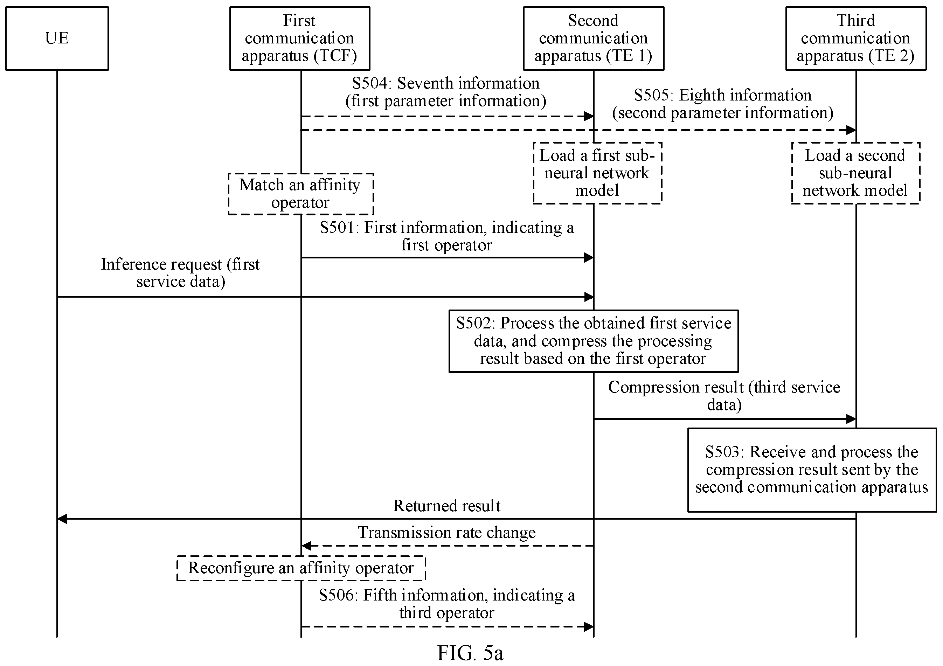

FIG. 5a is a schematic flowchart of a communication method according to an embodiment of this application. The method may be applied to the UE, the base station, and the core network device in the architecture of the mobile communication network in FIG. 1. In other words, the UE, the base station, and the core network device in FIG. 1 may be configured to support and perform related steps of the method procedure shown in FIG. 5a. Optionally, a first communication apparatus may be a core network device, an access network device, or UE, or may be a module/apparatus (such as a chip) in the core network device, the access network device, or the UE, or may be a component (such as a DU) that completes some functions of the core network device, the access network device, or the UE. Similarly, a second communication apparatus and a third communication apparatus may also be a core network device, an access network device, or UE, or a module/apparatus in the core network device, the access network device, or the UE, or a component that completes some functions of the core network device, the access network device, or the UE.

As shown in FIG. 5a, an example in which the first communication apparatus is a core network element, the second communication apparatus is a base station 1, and the third communication apparatus is a base station 2 is used. The communication method includes but is not limited to the following steps.

S501: The first communication apparatus sends first information to the second communication apparatus, where the first information indicates a first operator. Correspondingly, the second communication apparatus receives the first information from the first communication apparatus.

Specifically, a control node of a large model is deployed on the first communication apparatus. The control node may also be referred to as a task control function (task control function, TCF) node. The large model may further include a plurality of task execution (task execute, TE) nodes, for example, a TE 1 and a TE 2. Each task execution node may correspond to one sub-neural network model. For example, the TE 1 may correspond to a first sub-neural network model, and the TE 2 may correspond to a second sub-neural network model. In this embodiment of this application, one or more large model blocks (such as an encoder and a decoder) deployed on one communication apparatus may be considered as one complete sub-neural network model. In other words, one task execution node of the large model may include one or more large model blocks. The plurality of sub-neural network models of the large model may be respectively deployed on different communication apparatuses. For example, the TE 1 (corresponding to the first sub-neural network model) is deployed on the second communication apparatus, and the TE 2 (corresponding to the second sub-neural network model) is deployed on the third communication apparatus. The first communication apparatus may deliver configuration information to the second communication apparatus to indicate the first operator. The first operator may be used to compress to-be-transmitted service data between the plurality of sub-neural network models. For example, the first operator is used to compress service data transmitted by the second communication apparatus to another communication apparatus (for example, the third communication apparatus). The control node (TCF) of the large model may send configuration information to the TE 1 to indicate the first operator. The first operator may be used to compress to-be-transmitted service data between the TE 1 and the TE 2, thereby reducing a data amount of service data transmitted between different nodes, and improving performance of the large model. In this embodiment of this application, an operator used to compress to-be-transmitted service data between the plurality of sub-neural network models may also be referred to as an affinity operator, and an operator used to decompress the service data compressed by using the affinity operator may be referred to as a sparse operator.

Optionally, after determining a deployment solution of the large model in the mobile communication network, the first communication apparatus may send indication information to communication apparatuses on which sub-neural network models of the large model need to be deployed, where the indication information indicates these communication apparatuses to respectively load the corresponding sub-neural network models, so that these communication apparatuses have a capability of processing a large model service. For example, after determining that the TE 1 (corresponding to the first sub-neural network model) needs to be deployed on the second communication apparatus, and the TE 2 (corresponding to the second sub-neural network model) needs to be deployed on the third communication apparatus, the first communication apparatus may send seventh information to the second communication apparatus, and send eighth information to the third communication apparatus. The seventh information may include first parameter information, and the seventh information may indicate the second communication apparatus to load the first sub-neural network model based on the first parameter information. The eighth information may include second parameter information, and the eighth information may indicate the third communication apparatus to load the second sub-neural network model based on the second parameter information. Optionally, the first parameter information and the second parameter information may respectively include information such as a model structure of a corresponding sub-neural network model (for example, a quantity of layers of the model and a quantity of neurons in each layer), a loading platform for loading the sub-neural network model, and a management resource requirement (an amount of memory or storage that needs to be occupied).

S502: The second communication apparatus processes obtained first service data, and compresses the processing result based on the first operator.

Specifically, the TE 1 of the large model (that is, corresponding to the first sub-neural network model) is deployed on the second communication apparatus. After obtaining the first service data, the second communication apparatus may first input the first service data into the first sub-neural network model for processing and output the processing result (that is, second service data), and then compress the second service data by using the first operator to obtain third service data. A data amount of the third service data is less than a data amount of the second service data. Optionally, the first service data obtained by the second communication apparatus may be an inference request initiated by the UE, or may be an inference request initiated by the second communication apparatus, or may be an inference request initiated by another communication apparatus. This is not specifically limited herein. Optionally, the second communication apparatus may determine the first operator before obtaining the first service data, or may determine the first operator after obtaining the first service data. This is not specifically limited herein.

S503: The third communication apparatus receives and processes the compression result sent by the second communication apparatus.

Specifically, after compressing the service data, the second communication apparatus may send the compression result to the third communication apparatus, and the third communication apparatus may further process the compression result based on the second sub-neural network model. Optionally, if the third communication apparatus is deployed with the last task execution node of the large model (for example, a decoder 6 of a large language model), after processing the compression result, the third communication apparatus may return the processing result to a communication apparatus that initiated the inference request, as a response to the inference request. For example, if a UE is the initiator of the inference request, the third communication apparatus may return the processing result to the UE as a response to the inference request. Further, if the UE is not within the service range of the third communication apparatus (the base station 2), the third communication apparatus may first locate a base station (which may be the base station 1, that is, the second communication apparatus, or may be another base station) that currently serves the UE, and then the base station may forward the processing result to the UE. If the third communication apparatus is deployed with an intermediate node (for example, a decoder 3 of the large language model) instead of the last task execution node of the large model, the third communication apparatus needs to continue transmitting the processing result to a subsequent communication apparatus (for example, a communication apparatus deployed with a decoder 4 of the large language model), and the subsequent communication apparatus performs corresponding function processing until the service data is processed and transmitted to a communication apparatus deployed with the last task execution node of the large model. Finally, after processing the service data, that communication apparatus returns a response to the inference request to the UE. Optionally, it is assumed that a start node of the large model is deployed on the second communication apparatus, and the UE that initiates the inference request may be within or outside the service range of the second communication apparatus. If the UE is within the service range, the UE may directly send the inference request to the second communication apparatus. If the UE is outside the service range, the UE may send the inference request to an access network device that provides services for the UE, and then the access network device forwards the inference request to the second communication apparatus for processing.

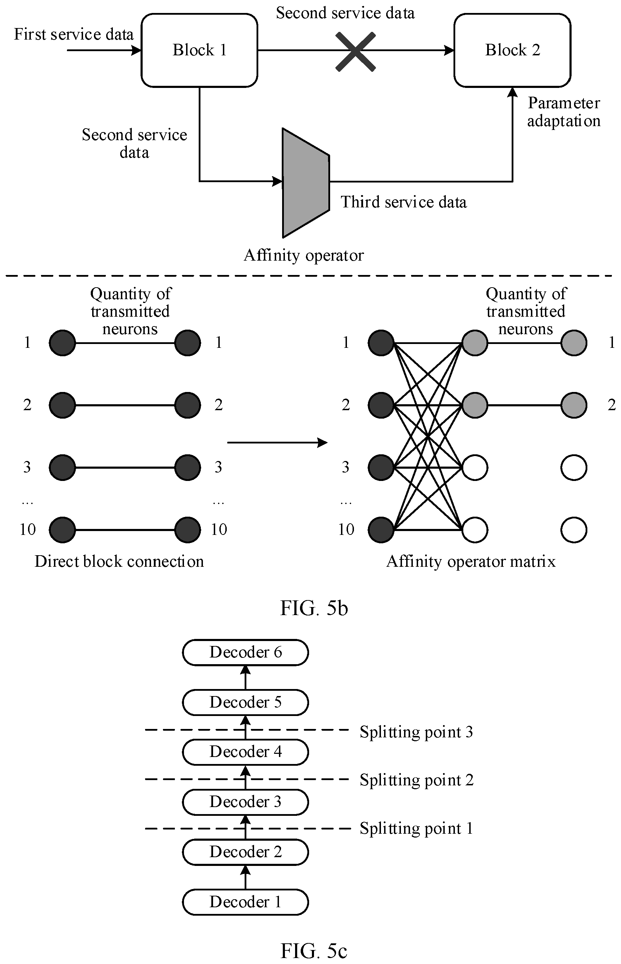

Optionally, for the principle of compressing service data by using the affinity operator in step S502, refer to the following several manners:
(1) The affinity operator can reduce repetition and redundancy in service data information by using a special encoding method, achieving data compression. For example, if a piece of data contains 000111...111000 (with 20 ones in the middle), writing out all the 20 ones would be lengthy. Through encoding, the 20 ones in the middle may be represented with less data, for example, 000(20 ones)000, so as to complete compression.
(2) The affinity operator may be a low-dimensional network affinity layer. A lower dimension of the affinity layer indicates a stronger compression capability of the affinity operator. Service data output after processing by a block (corresponding to a sub-neural network model) includes information about a plurality of neurons. After the output service data is processed by using the affinity operator, only some of these neurons have values greater than a preset threshold, whereas the other neurons have values less than or equal to the preset threshold. For example, among the plurality of neurons, only some neurons have values, whereas values of other neurons are 0. In this case, the second communication apparatus only needs to transmit information about the neurons with non-zero values to the third communication apparatus, without transmitting information about the other neurons with values of 0, thereby achieving compression. For example, as shown in the structure in FIG. 5b, the second service data output after the first service data is processed by a block 1 includes information about M (for example, M is 10) neurons, and the second service data is compressed by using the affinity operator to obtain the third service data, and then the third service data is sent to a block 2. The third service data includes information about N (for example, N is 2) neurons, the N neurons are part of the M neurons, and N is a positive integer less than M. It is assumed that the M neurons represent all neurons. In the direct block connection manner, as shown in FIG. 5b, the service data transmitted by the block 1 to the block 2 needs to include the information about all the M neurons. In the manner of adding the affinity operator between the blocks, the transmitted service data only needs to include the information about the N neurons among the M neurons, that is, information about some neurons among all the neurons. It may be assumed that an affinity operator matrix is *Wₑ,* and an output of the block 1 is *X* ∈ *R^{M}.* In this case, an output after processing by using the affinity operator is *Y = δₑ*(*X* ⊗ *Wₑ*) ∈ *R^{M}*, and values of neurons in the first N dimensions of *Y* are valid and are propagated forwards, where *X* represents a neuron output of the block 1, *X* is in M dimensions, *R^{M}* represents an M-dimensional real number, M is a dimension of the neuron output of the block 1, *Y* represents a neuron output of the affinity operator, *δₑ* represents an activation function corresponding to the affinity operator, and ⊗ represents matrix multiplication.
(3) Combination of the manner (1) and the manner (2). For example, the affinity operator may be used to first delete a quantity of neurons in the service data, and then reduce repetition and redundancy in information about each neuron, achieving a compression effect. For details, refer to the descriptions of the manner (1) and the manner (2) for combination. Details are not described herein again.

In a possible implementation, the affinity operator may be determined based on a model type and a model splitting point of the large model. For example, a network side may first preset an affinity operator matching table, as shown in Table 1, where one large model may be configured with one or more splitting points, and different types of large models may be configured with the same or different numbers of splitting points. For a single large model, when different splitting points are selected for model splitting, corresponding affinity operators may be separately configured.

**Table 1**

| Model type | Splitting point | Affinity operator |
|---|---|---|
| Chatgpt | 1 | Affinity operator #1 |
| Chatgpt | 2 | Affinity operator #2 |
| Chatgpt | 3 | Affinity operator #3 |
| Pangu | 1 | Affinity operator #4 |
| Pangu | 2 | Affinity operator #5 |

For example, as shown in FIG. 5c, a large model A may include six transformer blocks (all decoders), and there are three splitting points. When the large model A needs to be deployed in the mobile communication network, if the first communication apparatus (the control node) selects splitting point 1 as the position for splitting and deploying the large model, the task execution node (TE 1) deployed on the second communication apparatus includes decoders 1 and 2 (corresponding to the first sub-neural network model), while the task execution node (TE 2) deployed on the third communication apparatus includes decoders 3 to 6 (corresponding to the second sub-neural network model). The second communication apparatus may first compress the service data by using the affinity operator #1, and then send the compression result to the third communication apparatus for processing. Similarly, if the first communication apparatus (the control node) select splitting point 2 for splitting the large model, the decoders 1 to 3 are deployed on the second communication apparatus, and the decoders 4 to 6 are deployed on the third communication apparatus. The second communication apparatus may first compress the service data by using the affinity operator #2, and then send the compression result to the third communication apparatus for processing. In this embodiment of this application, a deployment solution in which the large model is split into two nodes is used as an example for description. A large model may also be split into more nodes, for example, three, four, or more, and these nodes may be deployed on different communication apparatuses in the mobile communication network. Optionally, a quantity of splitting points that may be configured for a large model may be determined based on a specific scale of the large model. For example, a large model with more than one trillion parameters may be configured with four splitting points, and a large model with a smaller scale may be configured with two or three splitting points. The control node may select one splitting point from a plurality of splitting points to split the large model into two parts, or may select two splitting points to split the large model into three parts, that is, select P splitting points to split the large model into P+1 parts.

A specific splitting point at which the large model needs to be split may be determined based on a capability of each communication apparatus on which the large model needs to be deployed in the mobile communication network. The foregoing example in which the large model A includes three splitting points is still used for description. A specific splitting point to be selected for splitting and deploying the large model may be determined based on capabilities of the second communication apparatus and the third communication apparatus. If the capability of the second communication apparatus is less than that of the third communication apparatus: the second communication apparatus cannot carry three or more decoders while the third communication apparatus may carry four or more decoders, the large model may be split at the splitting point 1, so that the decoders 1 and 2 are deployed on the second communication apparatus, and the decoders 3 to 6 are deployed on the third communication apparatus. If the second communication apparatus and the third communication apparatus have comparable capabilities, and each may carry three decoders, the large model may be split at the splitting point 2. Alternatively, if the capability of the second communication apparatus is greater than that of the third communication apparatus: the second communication apparatus may carry four decoders while the third communication apparatus may carry two decoders, the large model may be split at the splitting point 3.

Further, in step S501, the first communication apparatus may directly or indirectly indicate, by using the first information, the second communication apparatus to compress the service data by using the first operator. For example, in the direct indication manner, the first communication apparatus may locally prestore an affinity operator matching table (refer to Table 1). When determining a deployment solution of the large model in the mobile communication network, the first communication apparatus may learn of a large model type (that is, a specific type of large model) to be deployed and a model splitting point, so that the affinity operator matching table can be queried based on the information to determine a specific first operator (affinity operator) that needs to be used by the second communication apparatus, and then the first operator can be directly indicated by using the first information, that is, the first information can include the first operator. In the indirect indication manner, the second communication apparatus may locally prestore an affinity operator matching table. After determining a large model type to be deployed and a model splitting point, the first communication apparatus notifies the second communication apparatus of the large model type and the model splitting point by using the first information, and then the second communication apparatus determines a corresponding first operator through table lookup based on the large model type and the model splitting point. Further, the affinity operator #1 may alternatively be a set, and may include a plurality of affinity operators, that is, a large model type and a large model splitting point may correspond to a plurality of affinity operators. The first communication apparatus or the second communication apparatus may determine, from the plurality of affinity operators based on a current data transmission rate between the second communication apparatus and the third communication apparatus, an affinity operator (as the first operator) used for service data compression.

In a possible implementation, the network side may reconfigure an affinity operator for the second communication apparatus. This manner may be applied to a case in which a data transmission rate between the second communication apparatus and the third communication apparatus changes, and a change value is greater than or equal to a specific threshold. Alternatively, the control node may reconfigure an affinity operator for two task execution nodes. In this case, a change value in transmission bandwidth between the two task execution nodes may exceed a specific threshold. This allows for adaptation to new transmission bandwidth, and maximizes performance of the large model. Optionally, the first communication apparatus may deliver fifth information to the second communication apparatus, to indicate a third operator, where a compression ratio of the third operator is different from that of the first operator. For example, Table 1 is still used as an example. The affinity operator #1 may be a set, and may include a plurality of affinity operators. After determining the model type and the splitting point, the network side may determine that an affinity operator in the affinity operator #1 set needs to be used to compress the service data between the second communication apparatus and the third communication apparatus. Further, the network side may determine a corresponding affinity operator (that is, the first operator) from the affinity operator #1 set based on a current data transmission rate between the second communication apparatus and the third communication apparatus, and then indicate the second communication apparatus to compress the service data by using the affinity operator. Then, when a change value in the data transmission rate between the second communication apparatus and the third communication apparatus exceeds a preset threshold, the network side may reselect an affinity operator (that is, the third operator) from the affinity operator #1 set, and indicate the second communication apparatus to compress the service data by using the reselected affinity operator. For example, when the data transmission rate between the second communication apparatus and the third communication apparatus increases to a value greater than a specific threshold, the network side may select an affinity operator with a small compression capability from the affinity operator #1 set to compress the service data, to reduce information loss. When the data transmission rate decreases to a value greater than a specific threshold, the network side may select an affinity operator with a large compression capability from the affinity operator #1 set to compress the service data, to minimize performance deterioration of the large model.

The foregoing shows a manner of determining the affinity operator by querying the preconfigured affinity operator matching table based on the large model type and the splitting point. In another manner, an appropriate affinity operator may be trained based on a training algorithm, so that the second communication apparatus can compress the service data by using the trained affinity operator. This manner may be applied to a case in which an affinity operator cannot be determined through table lookup when a large model is not defined in advance or a splitting manner is not defined in advance.

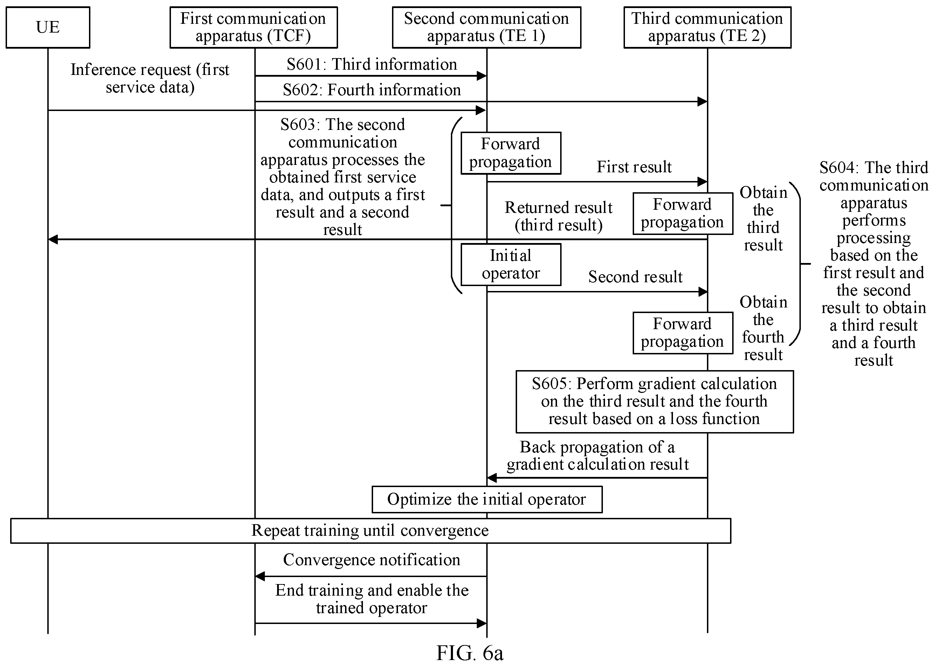

For example, FIG. 6a is a schematic flowchart of an affinity operator training method according to an embodiment of this application. The method may include but is not limited to the following steps.

S601: A first communication apparatus sends third information. Correspondingly, a second communication apparatus receives the third information from the first communication apparatus.

Specifically, the first communication apparatus may configure an initial operator for the second communication apparatus by using the third information, and indicate the second communication apparatus to start training for the initial operator. The initial operator may be used to compress service data transmitted by the second communication apparatus to another communication apparatus (for example, a third communication apparatus).

S602: The first communication apparatus sends fourth information. Correspondingly, a third communication apparatus receives the fourth information from the first communication apparatus.

Specifically, the first communication apparatus may configure a loss function for the third communication apparatus by using the fourth information, and indicate the third communication apparatus to train the initial operator based on the loss function. The first operator described above may be obtained based on training of the loss function and the initial operator.

A sequence of S601 and S602 is not limited in this embodiment of this application.

S603: The second communication apparatus processes obtained first service data, and outputs a first result and a second result. Correspondingly, the third communication apparatus receives the first result and the second result that are output by the second communication apparatus. Optionally, the first service data may be an inference request initiated by UE.

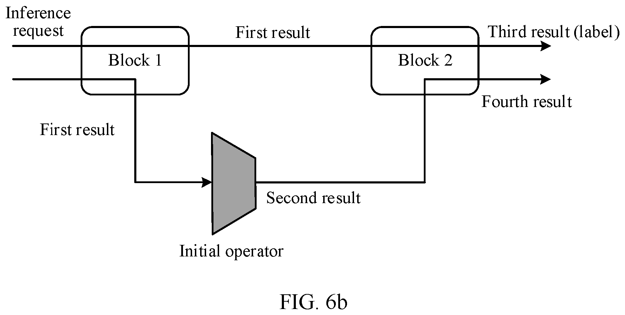

For example, after the first communication apparatus configures the initial operator for the second communication apparatus, the second communication apparatus may not directly enable the initial operator to compress the service data, but first enable a training function, and enable a trained operator (which may be the first operator mentioned above) after a training result is converged. For example, in a training phase, after the inference request of the UE is input into the second communication apparatus for processing, two outputs may be obtained. As shown in FIG. 6b, one output is not processed by using the initial operator, but is directly output (corresponding to the first result) after being processed by a block 1 (corresponding to a first sub-neural network model). Data obtained on a subsequent path of this output is used as a label (label) for training. The other output is obtained after being processed by the block 1 first and then by the initial operator, and corresponds to the second result. Then, the second communication apparatus outputs the two processing results to the third communication apparatus. A process in which the inference request is input into the first sub-neural network model for processing is a process of forward propagation.

S604: The third communication apparatus performs processing based on the first result and the second result to obtain a third result and a fourth result.

Specifically, the third communication apparatus inputs the first result into a second sub-neural network model for processing (a process of forward propagation) to obtain the third result, and inputs the second result into the second sub-neural network model for processing (a process of forward propagation) to obtain the fourth result. Optionally, because the third result is not processed by using the initial operator, the third communication apparatus (corresponding to a last task execution node of a large model) may feed back the third result as a processing result to the UE as a response to the inference request of the UE. Optionally, to ensure a smooth training process, after the training is enabled, an output (that is, the first result and the second result) of the second communication apparatus after the service data is processed may carry an identifier, so that the third communication apparatus can determine, based on the identifier, that the data is used to train the initial operator. Similarly, a gradient calculation result subsequently fed back by the third communication apparatus may also carry an identifier, so that the second communication apparatus can determine, by using the identifier, to optimize the initial operator based on the data.

S605: The third communication apparatus performs gradient calculation on the third result and the fourth result based on the loss function, and feeds back a calculation result to the second communication apparatus.

Specifically, after the third communication apparatus feeds back the gradient calculation result, the second communication apparatus may optimize (update) the initial operator based on the calculation result, and then repeat the foregoing training process (corresponding to steps S603 to S605) by using an optimized initial operator until a training result is converged and can meet a use requirement. Optionally, when the foregoing training process is repeated, the input of the second communication apparatus may be the inference request originally initiated by the UE, or may be a new inference request subsequently initiated by the UE. This is not specifically limited herein. For example, when the training result is converged, the second communication apparatus may first send a convergence notification to the first communication apparatus, where the notification may carry information about the trained initial operator (which may be the first operator described above). Then, the first communication apparatus may deliver indication information to indicate the second communication apparatus to end training, and indicate the second communication apparatus to subsequently compress the service data by using the trained first operator (refer to a process of steps S501 to S503 in FIG. 5a), thereby improving performance of the large model.

To resolve a problem that performance of the large model deteriorates when a plurality of nodes of the large model are respectively deployed on different communication apparatuses, this application provides a solution in which to-be-transmitted service data between different task execution nodes is compressed by using an affinity operator configured on a network side, to improve performance of the large model. Further, in this application, when configuring an affinity operator for a task execution node (for example, deployed on the second communication apparatus) of the large model, the network side may correspondingly configure a sparse operator for another task execution node (for example, deployed on the third communication apparatus) of the large model. In other words, the network side configures an affinity operator and a sparse operator as a pair, which are respectively used by the second communication apparatus and the third communication apparatus, so that the third communication apparatus can decompress, by using the sparse operator, service data compressed by using the affinity operator, thereby reducing information loss while improving performance of the large model.

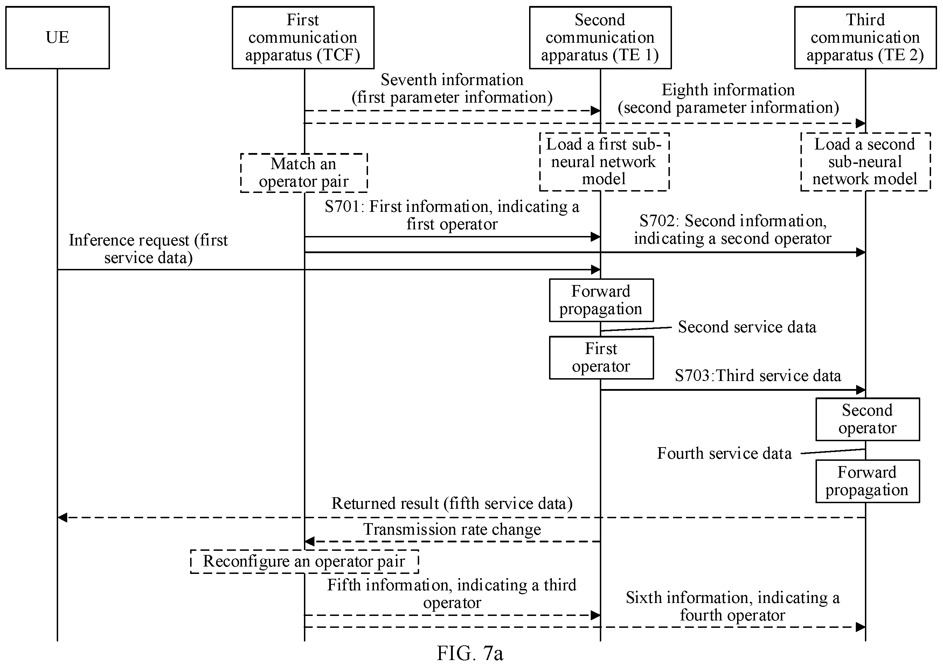

As shown in FIG. 7a, when sending first information to the second communication apparatus, to indicate the second communication apparatus to compress service data by using a first operator (for example, step S701), the first communication apparatus may further send second information to the third communication apparatus, to indicate the third communication apparatus to decompress, by using a second operator, the service data compressed by using the first operator (for example, step S702). Subsequently, after obtaining an inference request (that is, first service data) from UE, the second communication apparatus may first input the first service data into a first sub-neural network model (corresponding to a TE 1) for processing (referred to as forward propagation) to obtain second service data, then compress the second service data by using the first operator, and send compressed service data (that is, third service data) to the third communication apparatus (for example, step S703). After receiving the compressed third service data, the third communication apparatus may first decompress the third service data by using the second operator to obtain fourth service data, then input the decompressed fourth service data into a second sub-neural network model (corresponding to a TE 2) for processing (referred to as forward propagation) to obtain fifth service data, and finally return the fifth service data to the UE as a response to the inference request.

Optionally, decompressing the service data by using the sparse operator may be an inverse process of compressing the service data by using the affinity operator.

For example, for a principle of decompressing the service data by using the sparse operator, refer to the following several manners:
(1) For a manner in which the affinity operator reduces repetition and redundancy in service data information through special encoding, the sparse operator can restore compressed service data by using an encoding method relative to that of the affinity operator. For example, a segment of data whose content is 000 (20 ones) 000 after being compressed by using the affinity operator is decompressed to restore 000111...111000 (including 20 ones).
(2) For a manner in which the affinity operator implements compression by reducing a quantity of neurons in service data, after the service data is processed by using the affinity operator, information distribution of neurons changes, becoming more dense (in dense). After processing by using the affinity operator, an amount of mutual information between the input and output may be greatly lost, affecting accuracy of the large model. In this case, the sparse operator may readjust information distribution of all neurons based on information about some neurons, to reduce a degree of density. For example, after compression by using the affinity operator, only some (five neurons) of the 10 neurons originally output by the first sub-neural network model have values, while values of the other neurons (the other five neurons) are 0. The second communication apparatus needs to transmit only information about the neurons having values to the third communication apparatus, and does not transmit information about the other neurons having values of 0. Because an output of the first sub-neural network model and an input of the second sub-neural network model need to be in a same dimension, if an output dimension of the first sub-neural network model is 10 neurons, an input dimension of the second sub-neural network model also needs to be 10 neurons. However, after compression by using the affinity operator, only neurons in the first five dimensions of the 10 neurons may have values, and are transmitted to the third communication apparatus. Therefore, when the second sub-neural network model is input, neurons in the first five dimensions may have values, neurons in the last five dimensions may have values of 0, and information is intensively concentrated on the neurons in the first five dimensions. In this case, before inputting the service data (that is, the third service data) output by the second communication apparatus into the second sub-neural network model, the third communication apparatus may first perform decompression by using the sparse operator, to readjust information distribution of the 10 neurons, so as to reduce a degree of information density. Optionally, in this manner of reducing the quantity of neurons, an objective of the affinity operator and the sparse operator is not lossless information H(X) before and after the processing, but lossless mutual information I(X,Y) between the input and the output. Therefore, using the affinity operator and the sparse operator in pairs can bring high compression efficiency, and help improve performance of the large model.

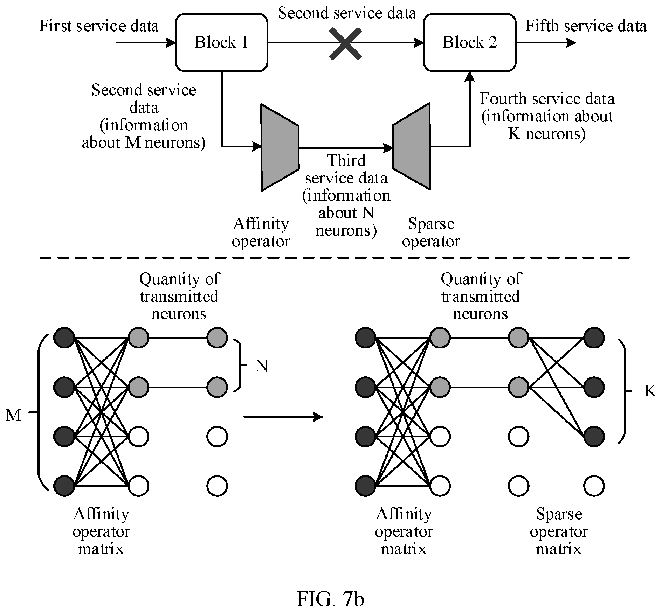

For example, as shown in a structure in FIG. 7b, the second service data output after the first service data is processed by a block 1 includes information about M (for example, M is 10) neurons, and the second service data is compressed by using the affinity operator to obtain the third service data, and then the third service data is sent to a block 2. The third service data includes information about N (for example, N is 5) neurons, the N neurons are part of the M neurons, and N is a positive integer less than M. In a manner in which there is only the affinity operator between blocks, the transmitted service data only needs to include the information about the N neurons. When a next block is input, only the N neurons have values (marked in gray). In a manner in which the sparse operator is added, the fourth service data is obtained after the third service data is processed by using the sparse operator. The fourth service data includes coefficient information of K (for example, K is 8) neurons. In this case, when the fourth service data is input into the second sub-neural network model, neurons in eight dimensions of the 10 neurons have values, and values of neurons in the other two dimensions are 0, where K is a positive integer greater than N and less than or equal to M. It may be assumed that a sparse operator matrix is *W_{d}*, and an output of the block 1 is *X* ∈ *R^{M}*. In this case, an output after processing by using the affinity operator is *Y* = *δₑ*(*X* ⊗ *Wₑ*) ∈ *R^{M}*, and an output after processing by using the sparse operator is *Z* = *δₑ*(*Y^{N}* ⊗ *W_{d}*) ∈ *R^{M}*, where *X* represents a neuron output of the block 1, *R^{M}* represents an M-dimensional real number, M is a dimension of a neuron output of the block 1, *Y* represents a neuron output of the affinity operator, values of neurons in the first N dimensions of *Y* are valid, *Y^{N}* represents values of neurons in the first N dimensions, *δₑ* represents an activation function corresponding to the affinity operator, *δ_{d}* represents an activation function corresponding to the sparse operator, ⊗ represents matrix multiplication, *Z* represents a neuron output of the sparse operator, values of neurons in the first K dimensions of *Z* are valid, and K is a positive integer greater than N and less than or equal to M.

(3) For a combination of the manner (1) and the manner (2), refer to the foregoing descriptions of the manner (1) and the manner (2), that is, an inverse process of the manner (3) for the affinity operator. Details are not described herein again.

In a possible implementation, the sparse operator may be determined together with the affinity operator based on a model type and a model splitting point of the large model. For example, the network side may first preset an operator pair matching table, as shown in Table 2. One or more splitting points may be configured for one large model. When different splitting points are selected for model splitting, corresponding operator pairs (including an affinity operator and a sparse operator) may be separately configured.

**Table 2**

| Model type | Splitting point | Affinity operator and sparse operator |
|---|---|---|
| Llama | 1 | Operator pair #1 |
| Llama | 2 | Operator pair #2 |

For example, the large model Llama may have two splitting points. If the first communication apparatus (the control node) selects the splitting point 1 as a location at which the large model is split and deployed, after a task execution node (TE 1, corresponding to the first sub-neural network model) deployed on the second communication apparatus processes the service data, the second communication apparatus may first compress a processing result by using an affinity operator in the operator pair #1, and then transmit compressed data to the third communication apparatus. After receiving the service data sent by the second communication apparatus, the third communication apparatus may first decompress the service data by using a sparse operator in the operator pair #1, and then deliver decompressed service data to a task execution node (TE 2, corresponding to the second sub-neural network model) for processing.

Optionally, the first communication apparatus may directly or indirectly indicate, by using the second information, the third communication apparatus to perform decompression by using the second operator (that is, the sparse operator). For a specific indication manner, refer to the related descriptions in step S501 in which the first communication apparatus indicates the second communication apparatus to use the first operator. Details are not described herein again.

In a possible implementation, when a data transmission rate between the second communication apparatus and the third communication apparatus changes, and a change value is greater than or equal to a specific threshold, the network side may reconfigure an affinity operator (for example, a third operator) for the second communication apparatus. Correspondingly, the network side may also reconfigure a sparse operator corresponding to the new affinity operator for the third communication apparatus. For example, the first communication apparatus sends sixth information to the third communication apparatus, where the sixth information indicates a fourth operator, the fourth operator is used to decompress the service data compressed by using the third operator, the fourth operator is the new sparse operator, and the third operator is the new affinity operator. A decompression ratio of the new sparse operator may be different from or the same as that of the previous sparse operator. This is not specifically limited herein.

Similar to the manner of determining the affinity operator, in a possible implementation, an appropriate affinity operator and an appropriate sparse operator may also be trained based on a training algorithm, so that the second communication apparatus can compress the service data by using the trained affinity operator, and the third communication apparatus can decompress, by using the trained sparse operator, the service data compressed by using the affinity operator. This manner may be applied to a case in which an affinity operator and a sparse operator cannot be determined through table lookup when a large model is not defined in advance or a splitting manner is not defined in advance.

Optionally, the training process of the affinity operator and the training process of the sparse operator may be performed together, or may be performed separately. For example, the affinity operator may be first trained (the process shown in FIG. 6a), and then the sparse operator is trained (refer to the process shown in FIG. 6a). The following provides an example description of training the affinity operator and the sparse operator together.

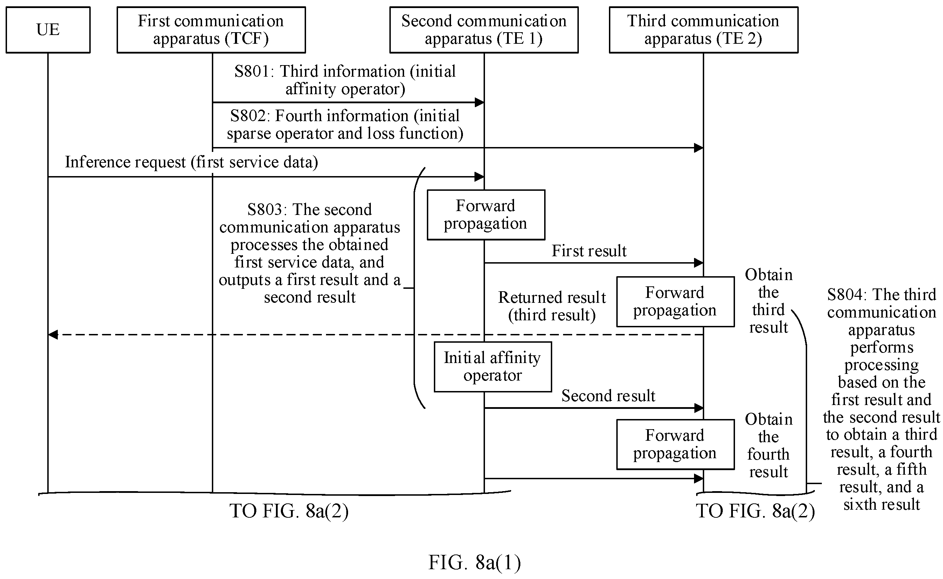

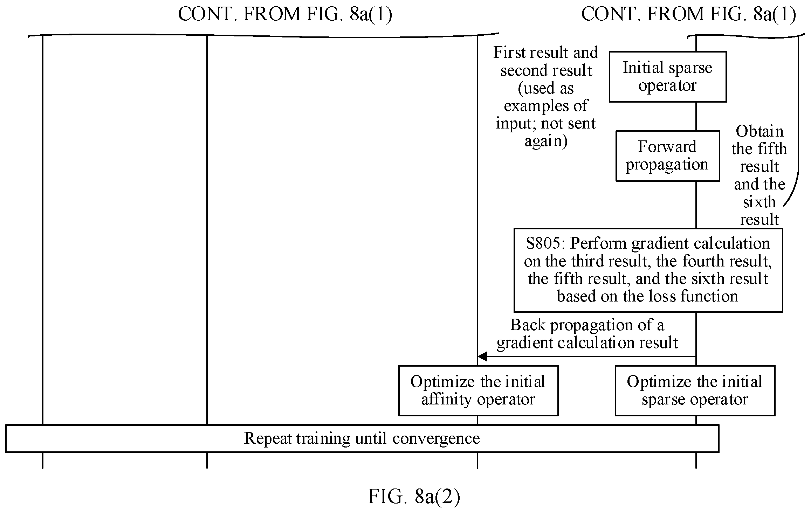

FIG. 8a(1) and FIG. 8a(2) are a schematic flowchart of an operator pair training method according to an embodiment of this application. The method may include but is not limited to the following steps.

S801: A first communication apparatus sends third information. Correspondingly, a second communication apparatus receives the third information from the first communication apparatus.

Specifically, the first communication apparatus may configure an initial affinity operator for the second communication apparatus by using the third information, and indicate the second communication apparatus to start training for the initial affinity operator.

S802: The first communication apparatus sends fourth information. Correspondingly, a third communication apparatus receives the fourth information from the first communication apparatus.

Specifically, the first communication apparatus may configure a loss function and an initial sparse operator for the third communication apparatus by using the fourth information, and indicate the third communication apparatus to train the initial affinity operator and the initial sparse operator based on the loss function.

A sequence of S801 and S802 is not limited in this embodiment of this application.

S803: The second communication apparatus processes obtained first service data, and outputs a first result and a second result (refer to step S603). Correspondingly, the third communication apparatus receives the first result and the second result that are output by the second communication apparatus. Optionally, the first service data may be an inference request initiated by UE.

S804: The third communication apparatus performs processing based on the first result and the second result to obtain a third result, a fourth result, a fifth result, and a sixth result.

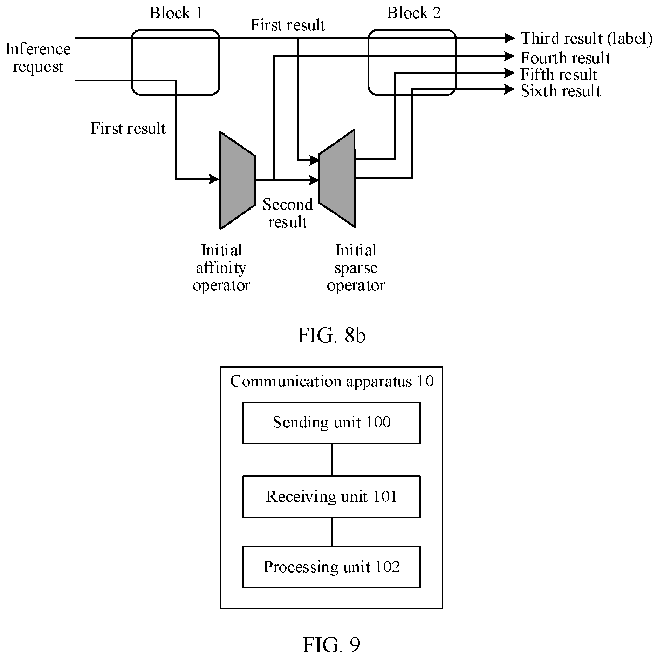

For example, refer to FIG. 8b. The third communication apparatus inputs the first result into a second sub-neural network model for processing (a process of forward propagation) to obtain the third result (which may be used as a training label), and inputs the second result into the second sub-neural network model for processing (a process of forward propagation) to obtain the fourth result. The first result is first processed by using the initial sparse operator and then input into the second sub-neural network model for processing to obtain the fifth result, and the second result is first processed by using the initial sparse operator and then input into the second sub-neural network model for processing to obtain the sixth result. Optionally, because the third result is not processed by using the initial affinity operator and the initial sparse operator, the third communication apparatus (corresponding to a last task execution node of a large model) may feed back the third result as a processing result to the UE as a response to the inference request of the UE.

S805: The third communication apparatus performs gradient calculation on the third result, the fourth result, the fifth result, and the sixth result based on the loss function, and feeds back a calculation result to the second communication apparatus.

Specifically, after obtaining the gradient calculation result, the third communication apparatus may feed back the gradient calculation result to the second communication apparatus, and optimize (update) the initial sparse operator. Alternatively, the second communication apparatus may optimize (update) the initial affinity operator based on the gradient calculation result, and then repeat the foregoing training process (corresponding to steps S803 to S805) by using an optimized initial affinity operator and an optimized initial sparse operator, until a training result is converged and can meet a use requirement. Optionally, when the foregoing training process is repeated, the input of the second communication apparatus may be the inference request originally initiated by the UE, or may be a new inference request subsequently initiated by the UE. This is not specifically limited herein. For example, when the training result is converged, the second communication apparatus and the third communication apparatus may separately send a convergence notification to the first communication apparatus, where the notification may separately carry information about the trained affinity operator and information about the trained sparse operator. Then, the first communication apparatus may deliver indication information to indicate the second communication apparatus and the third communication apparatus to end training, indicate the second communication apparatus to subsequently compress the service data by using the trained affinity operator, and indicate the third communication apparatus to decompress, by using the trained sparse operator, the service data compressed by using the affinity operator (not shown in FIG. 8a(1) and FIG. 8a(2), but refer to the descriptions in FIG. 6a).

In conclusion, in the foregoing embodiment, when a plurality of task execution nodes (TEs, corresponding to one or more blocks) of the large model are respectively deployed on different communication apparatuses in a mobile communication network, a network side may configure a network affinity operator (that is, the first operator), to compress to-be-transmitted service data between the plurality of task execution nodes, so as to reduce a data magnitude of service data that needs to be transmitted between different task execution nodes, and effectively and timely complete data transmission even when interface bandwidth between the different communication apparatuses is limited, thereby improving performance of the large model. Further, when configuring an affinity operator for a task execution node (for example, deployed on the second communication apparatus) of the large model, the network side may correspondingly configure a sparse operator for another task execution node (for example, deployed on the third communication apparatus) of the large model, so that the third communication apparatus can decompress, by using the sparse operator, service data compressed by using the affinity operator, thereby reducing information loss while improving performance of the large model.

The foregoing content describes the methods provided in this application. To facilitate implementation of the foregoing solutions in embodiments of this application, embodiments of this application further provide corresponding apparatuses or devices.

In this application, the apparatus is divided into functional modules according to the foregoing method embodiments. For example, functional modules corresponding to functions may be obtained through division, or two or more functions may be integrated into one processing module. The integrated module may be implemented in a form of hardware, or may be implemented in a form of a software functional module. In this application, division into modules is an example, and is merely logical function division. In actual implementation, another division manner may be used. The following describes apparatuses in embodiments of this application with reference to the accompanying drawings.

FIG. 9 is a diagram of a structure of a communication apparatus according to an embodiment of this application. The communication apparatus 10 may be configured to implement functions of the first communication apparatus, the second communication apparatus, or the third communication apparatus in any one of the foregoing method embodiments, and therefore can also achieve beneficial effects of the foregoing method embodiments.

As shown in FIG. 9, the communication apparatus 10 may include a sending unit 100, a receiving unit 101, and a processing unit 102. In a possible design, when the communication apparatus 10 is configured to implement the functions of the first communication apparatus, functions of the units are as follows:

The sending unit 100 is configured to send first information to a second communication apparatus in a mobile communication network, where a first sub-neural network model among a plurality of sub-neural network models is deployed on the second communication apparatus, the first information indicates a first operator, the first operator is used to compress service data transmitted by the second communication apparatus to another communication apparatus, and the another communication apparatus is deployed with a sub-neural network model other than the first sub-neural network model among the plurality of sub-neural network models. Optionally, the receiving unit 101 may be configured to receive various types of information sent by the another communication apparatus. The processing unit 102 may be configured to generate various types of information sent by the sending unit 100, or process various types of information received by the receiving unit 101.

In a possible implementation, the sending unit 100 is further configured to:
send second information to a third communication apparatus in the mobile communication network, where a second sub-neural network model among the plurality of sub-neural network models is deployed on the third communication apparatus, the second information indicates a second operator, and the second operator is used to decompress the service data compressed by using the first operator.

In a possible implementation, the first operator and/or the second operator are/is determined based on a model type and a model splitting point of the large model, or based on a training algorithm.

In a possible implementation, the sending unit 100 is further configured to:
send third information to the second communication apparatus, where the third information includes an initial operator, and the initial operator is used to compress the service data transmitted by the second communication apparatus to the another communication apparatus; and
send fourth information to the third communication apparatus in the mobile communication network, where the fourth information includes a loss function, and the first operator is obtained based on training of the loss function and the initial operator.

In a possible implementation, the sending unit 100 is further configured to:
send fifth information to the second communication apparatus, where the fifth information indicates a third operator, the third operator is used to compress the service data transmitted by the second communication apparatus to the another communication apparatus, and a compression ratio of the third operator is different from that of the first operator.

In a possible implementation, the sending unit 100 is further configured to:
send sixth information to the third communication apparatus in the mobile communication network, where the sixth information indicates a fourth operator, and the fourth operator is used to decompress the service data compressed by using the third operator.

In a possible implementation, the sending unit 100 is further configured to:
send seventh information to the second communication apparatus, where the seventh information includes first parameter information of the large model, and the seventh information indicates the second communication apparatus to load the first sub-neural network model of the large model based on the first parameter information; and
send eighth information to the third communication apparatus in the mobile communication network, where the eighth information includes second parameter information of the large model, and the eighth information indicates the third communication apparatus to load the second sub-neural network model of the large model based on the second parameter information.

In a possible design, when the communication apparatus 10 is configured to implement the functions of the second communication apparatus, functions of the units are as follows:

The receiving unit 101 is configured to receive first information sent by a first communication apparatus in a mobile communication network, where the first information indicates a first operator, a large model further includes a control node, and the control node is deployed on the first communication apparatus.

The processing unit 102 is configured to obtain first service data, and input the first service data into a first sub-neural network model for processing to obtain second service data.

The sending unit 100 is configured to send third service data to a third communication apparatus in the mobile communication network, where a second sub-neural network model of the large model is deployed on the third communication apparatus, the third service data is obtained by compressing the second service data based on the first operator, and a data amount of the third service data is less than a data amount of the second service data.

In a possible implementation, the first operator is determined based on a model type and a model splitting point of the large model, or the first operator is determined by the second communication apparatus and the third communication apparatus based on a training algorithm.

In a possible implementation, the receiving unit 101 is further configured to receive third information sent by the first communication apparatus, where the third information includes an initial operator, the third information indicates the second communication apparatus to train the initial operator, the initial operator is used to compress service data transmitted by the second communication apparatus to another communication apparatus, and the first operator is obtained based on training of the initial operator.

In a possible implementation, that the data amount of the third service data is less than the data amount of the second service data includes: the second service data includes information about M neurons, the third service data includes information about N neurons, the N neurons are part of the M neurons, and N is a positive integer less than M.

In a possible implementation, the receiving unit 101 is further configured to:
receive fifth information sent by the first communication apparatus, where the fifth information indicates a third operator, the third operator is used to compress the service data transmitted by the second communication apparatus to the another communication apparatus, a compression ratio of the third operator is different from that of the first operator, and a change value in a data transmission rate between the second communication apparatus and the third communication apparatus is greater than or equal to a preset threshold.

In a possible implementation, the receiving unit 101 is further configured to:
receive seventh information sent by the first communication apparatus, where the seventh information includes first parameter information of the large model; and load the first sub-neural network model of the large model based on the first parameter information.

In a possible implementation, the first service data is a service request sent by a terminal device, and a response to the first service data is obtained based on processing of the third service data by using the second sub-neural network model.

In a possible design, when the communication apparatus 10 is configured to implement the functions of the third communication apparatus, functions of the units are as follows:

The receiving unit 101 is configured to receive second information sent by a first communication apparatus in a mobile communication network, where the second information indicates a second operator, a large model further includes a control node, and the control node is deployed on the first communication apparatus.

The receiving unit 101 is further configured to receive third service data sent by a second communication apparatus in the mobile communication network, where a first sub-neural network model of the large model is deployed on the second communication apparatus.

The processing unit 102 is configured to input fourth service data into the second sub-neural network model for processing to obtain fifth service data.

The sending unit 100 is configured to send the fifth service data, where the fourth service data is obtained by decompressing the third service data based on the second operator, and a data amount of the third service data is less than a data amount of the fourth service data.

In a possible implementation, the second operator is determined based on a model type and a model splitting point of the large model, or the second operator is determined by the first communication apparatus and the second communication apparatus based on a training algorithm.

In a possible implementation, the receiving unit 101 is further configured to:
receive fourth information sent by the first communication apparatus, where the fourth information includes a loss function, a first operator of the second communication apparatus is obtained based on training of the loss function, and the first operator is used to compress service data transmitted by the second communication apparatus to another communication apparatus.

In a possible implementation, that the data amount of the third service data is less than the data amount of the fourth service data includes: the third service data includes information about N neurons, the fourth service data includes information about K neurons, the N neurons are part of the K neurons, and N is a positive integer less than K.

In a possible implementation, the receiving unit 101 is further configured to:
receive sixth information sent by the first communication apparatus, where the sixth information indicates a fourth operator, and the fourth operator is used to decompress service data compressed by using a third operator.

In a possible implementation, the receiving unit 101 is further configured to:
receive eighth information sent by the first communication apparatus, where the eighth information includes second parameter information of the large model; and load the second sub-neural network model of the large model based on the second parameter information.

In a possible implementation, the sending unit 100 is specifically configured to:
send the fifth service data to a terminal device, where the fifth service data is a response to a service request initiated by the terminal device.

For functions of functional units/modules of the communication apparatus described in embodiments of this application, refer to the related descriptions in the foregoing method embodiments. Details are not described herein again.

Specific descriptions of the receiving unit, the sending unit, and the processing unit shown in the foregoing apparatus embodiments are merely examples. For specific functions, performed steps, or the like of the receiving unit, the sending unit, and the processing unit, refer to the descriptions in any one of the method embodiments. Details are not described herein again.

The foregoing describes the communication apparatus in embodiments of this application, and the following describes a possible product form of the communication apparatus. Any form of product that has a function of the communication apparatus described in FIG. 9 falls within the protection scope of embodiments of this application. The following descriptions are merely examples, and a product form of the communication apparatus in embodiments of this application is not limited thereto.

In a possible implementation, in the communication apparatus shown in FIG. 9, the processing unit 102 may be one or more processors; the sending unit 100 and the receiving unit 101 may be a transceiver; or the sending unit 100 may be a transmitter, and the receiving unit 101 may be a receiver. In embodiments of this application, the processor and the transceiver may be coupled, or the like. A manner of connection between the processor and the transceiver is not limited in embodiments of this application. In a process of performing the foregoing method, a process of sending information in the foregoing method may be understood as a process of outputting the information by the processor. When outputting the information, the processor outputs the information to a transceiver, so that the transceiver transmits the information. After the information is output by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information into the processor. Still further, after the transceiver receives the information, other processing may need to be performed on the information before the information is input into the processor.

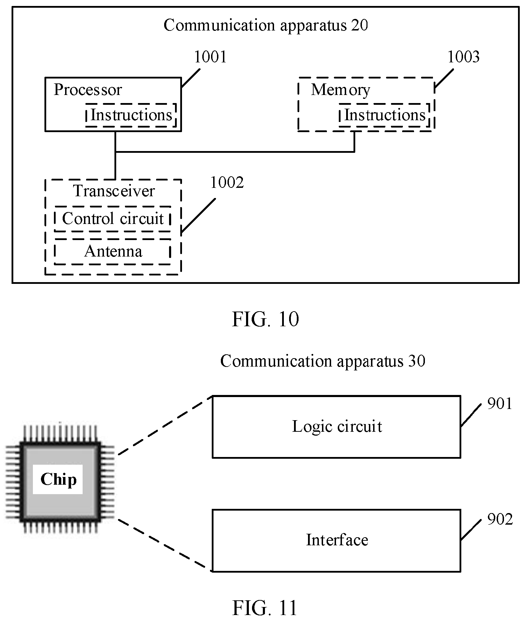

FIG. 10 is a diagram of a structure of another communication apparatus according to an embodiment of this application. The communication apparatus 20 may be the communication apparatus 10 or a chip in the communication apparatus 10. FIG. 10 shows only main components in the communication apparatus 20. In addition to a processor 1001, optionally, the communication apparatus 20 may further include a transceiver 1002, a memory 1003, or an input/output apparatus (not shown in the figure).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to: perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The transceiver 1002 may include a receiver and a transmitter. The receiver is configured to perform a receiving function (or operation), and the transmitter is configured to perform a transmitting function (or operation). The transceiver is configured to communicate with another device/apparatus through a transmission medium.

The processor 1001, the transceiver 1002, and the memory 1003 may be connected through a communication bus.

For example, when the communication apparatus 20 is configured to perform the steps, methods, or functions related to the first communication apparatus, the processor 1001 is configured to send first information to a second communication apparatus in a mobile communication network, where a first sub-neural network model among a plurality of sub-neural network models is deployed on the second communication apparatus, the first information indicates a first operator, the first operator is used to compress service data transmitted by the second communication apparatus to another communication apparatus, and the another communication apparatus is deployed with a sub-neural network model other than the first sub-neural network model among the plurality of sub-neural network models. Optionally, the transceiver 1002 may also be configured to complete some message receiving or sending functions of the processor 1001.

For example, when the communication apparatus 20 is configured to perform the steps, methods, or functions related to the second communication apparatus, the processor 1001 is configured to: receive first information sent by a first communication apparatus in a mobile communication network, where the first information indicates a first operator, a large model further includes a control node, and the control node is deployed on the first communication apparatus; obtain first service data, and input the first service data into a first sub-neural network model for processing to obtain second service data; and send third service data to a third communication apparatus in the mobile communication network, where a second sub-neural network model of the large model is deployed on the third communication apparatus, the third service data is obtained by compressing the second service data based on the first operator, and a data amount of the third service data is less than a data amount of the second service data. Optionally, the transceiver 1002 may also be configured to complete some message receiving or sending functions of the processor 1001.

For example, when the communication apparatus 20 is configured to perform the steps, methods, or functions related to the third communication apparatus, the processor 1001 is configured to: receive second information sent by a first communication apparatus in a mobile communication network, where the second information indicates a second operator, the large model further includes a control node, and the control node is deployed on the first communication apparatus; receive third service data sent by a second communication apparatus in the mobile communication network, where a first sub-neural network model of the large model is deployed on the second communication apparatus; input fourth service data into a second sub-neural network model for processing to obtain fifth service data; and send the fifth service data, where the fourth service data is obtained by decompressing the third service data based on the second operator, and a data amount of the third service data is less than a data amount of the fourth service data. Optionally, the transceiver 1002 may also be configured to complete some message receiving or sending functions of the processor 1001.

For specific descriptions of the processor and the transceiver, refer to the descriptions of the processing unit, the receiving unit, and the sending unit in the apparatus embodiment in FIG. 9. Details are not described herein again.

Optionally, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

Optionally, the processor 1001 may store instructions. The instructions may be a computer program. The computer program is run on the processor 1001, to enable the communication apparatus 20 to perform the method described in the foregoing method embodiments. The computer program may be solidified in the processor 1001. In this case, the processor 1001 may be implemented by hardware.

In an implementation, the communication apparatus 20 may include a circuit. The circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-channel metal oxide semiconductor (nMetal-oxide-semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

The communication apparatus shown in embodiments of this application may further have more components than those in FIG. 10, or the like. This is not limited in embodiments of this application. The foregoing methods performed by the processor and the transceiver are merely examples. For specific steps performed by the processor and the transceiver, refer to the descriptions in the foregoing method embodiments.

In another possible implementation, in the communication apparatus in FIG. 9, the processing unit 102 may be one or more logic circuits, and the sending unit 100 and the receiving unit 101 may be an input/output interface, or referred to as a communication interface, an interface circuit, an interface, or the like. Alternatively, the sending unit may be an output interface, and the receiving unit may be an input interface. The sending unit and the receiving unit are integrated into one unit, for example, an input/output interface. FIG. 11 is a diagram of a structure of still another communication apparatus according to an embodiment of this application. As shown in FIG. 11, the communication apparatus 30 includes a logic circuit 901 and an interface 902. That is, the processing unit 102 may be implemented by the logic circuit 901, and the sending unit 100 and the receiving unit 101 may be implemented by the interface 902. The logic circuit 901 may be a chip, a processing circuit, an integrated circuit, a system on chip (system on chip, SoC) chip, or the like. The interface 902 may be a communication interface, an input/output interface, a pin, or the like. For example, FIG. 11 is shown by using an example in which the communication apparatus 30 is a chip. The chip includes the logic circuit 901 and the interface 902.

In embodiments of this application, the logic circuit and the interface may be coupled to each other. A specific manner of connection between the logic circuit and the interface is not limited in embodiments of this application.

The communication apparatus 30 may be configured to perform the methods, functions, or steps related to the first communication apparatus, the second communication apparatus, or the third communication apparatus in the foregoing method embodiments.

For example, when the communication apparatus 30 is configured to perform the methods, functions, or steps related to the first communication apparatus, the interface 902 is configured to send first information to a second communication apparatus in a mobile communication network, where a first sub-neural network model among a plurality of sub-neural network models is deployed on the second communication apparatus, the first information indicates a first operator, the first operator is used to compress service data transmitted by the second communication apparatus to another communication apparatus, and the another communication apparatus is deployed with a sub-neural network model other than the first sub-neural network model among the plurality of sub-neural network models. Optionally, the logic circuit 901 may be configured to generate a message sent by the transceiver 1002 or process a message received by the transceiver 1002.

The communication apparatus 30 may also perform the methods, functions, or steps related to the second communication apparatus or the third communication apparatus. For related descriptions of the logic circuit 901 and the interface 902, refer to the related descriptions of the methods, functions, or steps related to the first communication apparatus performed by the communication apparatus 20 and the communication apparatus 30. Details are not described herein again.

For specific descriptions of the logic circuit 901 and the interface 902, refer to the descriptions of the processing unit, the sending unit, and the receiving unit in the apparatus embodiment in FIG. 9. Details are not described herein again.

The communication apparatus shown in embodiments of this application may implement the methods provided in embodiments of this application in a form of hardware, or may implement the methods provided in embodiments of this application in a form of software. This is not limited in embodiments of this application.

For specific implementations of the embodiment shown in FIG. 11, refer to the foregoing embodiments. Details are not described herein again.

An embodiment of this application further provides a mobile communication system. The mobile communication system includes a first communication apparatus, a second communication apparatus, and a third communication apparatus. The first communication apparatus, the second communication apparatus, and the third communication apparatus may be configured to perform the method in any one of the foregoing embodiments.

In addition, this application further provides a computer program. The computer program is used to implement operations and/or processing performed by the communication apparatus 10, the communication apparatus 20, and the communication apparatus 30 in the methods provided in this application.

This application further provides a readable storage medium. The readable storage medium stores computer code. When the computer code is run on a computer, the computer is enabled to perform operations and/or processing performed by the communication apparatus 10, the communication apparatus 20, and the communication apparatus 30 in the methods provided in this application.

This application further provides a computer program product. The computer program product includes computer code or a computer program. When the computer code or the computer program is run on a computer, operations and/or processing performed by the communication apparatus 10, the communication apparatus 20, and the communication apparatus 30 in the methods provided in this application are/is performed.

An embodiment of this application further provides a chip system. The chip system includes a processor, configured to support a device in implementing a function in any one of the foregoing embodiments, for example, generating or processing information in the foregoing communication method. In a possible design, the chip system further includes a memory, and the memory is configured to store program instructions and data that are necessary for the device. The chip system may include a chip, or may include a chip and another discrete component.

In the foregoing embodiments, the description of each embodiment has respective focuses. For a part that is not described in detail in an embodiment, refer to related descriptions in other embodiments.

To make the description brief, the foregoing method embodiments are expressed as a series of actions. However, a person skilled in the art should appreciate that this application is not limited to the described action sequence, because according to this application, some steps may be performed in other sequences or performed simultaneously. It should be further appreciated by a person skilled in the art that embodiments described in this specification all belong to example embodiments, and the involved actions and modules are not necessarily required by this application.

In several embodiments provided in this application, the disclosed system, apparatuses, and method may be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effect of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The foregoing readable storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first communication apparatus in a mobile communication network, wherein the method comprises:
sending first information to a second communication apparatus in the mobile communication network, wherein a first sub-neural network model among a plurality of sub-neural network models of a large model is deployed on the second communication apparatus, the first information indicates a first operator, the first operator is used to compress service data transmitted by the second communication apparatus to another communication apparatus, and the another communication apparatus is deployed with a sub-neural network model other than the first sub-neural network model among the plurality of sub-neural network models.

2. The method according to claim 1, further comprising:
sending second information to a third communication apparatus in the mobile communication network, wherein a second sub-neural network model among the plurality of sub-neural network models is deployed on the third communication apparatus, the second information indicates a second operator, and the second operator is used to decompress the service data compressed by using the first operator.

3. The method according to claim 1 or 2, wherein the first operator and/or the second operator are/is determined based on a model type and a model splitting point of the large model, or based on a training algorithm.

4. The method according to any one of claims 1 to 3, further comprising:
sending third information to the second communication apparatus, wherein the third information comprises an initial operator, and the initial operator is used to compress the service data transmitted by the second communication apparatus to the another communication apparatus; and
sending fourth information to the third communication apparatus in the mobile communication network, wherein the fourth information comprises a loss function, and the first operator is obtained based on training of the loss function and the initial operator.

5. The method according to any one of claims 1 to 4, further comprising:
sending fifth information to the second communication apparatus, wherein the fifth information indicates a third operator, the third operator is used to compress the service data transmitted by the second communication apparatus to the another communication apparatus, and a compression ratio of the third operator is different from that of the first operator.

6. The method according to claim 5, further comprising:
sending sixth information to the third communication apparatus in the mobile communication network, wherein the sixth information indicates a fourth operator, and the fourth operator is used to decompress the service data compressed by using the third operator.

7. The method according to any one of claims 1 to 6, further comprising:
sending seventh information to the second communication apparatus, wherein the seventh information comprises first parameter information of the large model, and the seventh information indicates the second communication apparatus to load the first sub-neural network model of the large model based on the first parameter information; and
sending eighth information to the third communication apparatus in the mobile communication network, wherein the eighth information comprises second parameter information of the large model, and the eighth information indicates the third communication apparatus to load the second sub-neural network model of the large model based on the second parameter information.

8. A communication method, applied to a second communication apparatus in a mobile communication network, wherein the method comprises:
receiving first information sent by a first communication apparatus in the mobile communication network, wherein the first information indicates a first operator;
obtaining first service data, and inputting the first service data into a first sub-neural network model of a large model for processing to obtain second service data; and
sending third service data to a third communication apparatus in the mobile communication network, wherein a second sub-neural network model of the large model is deployed on the third communication apparatus, the third service data is obtained by compressing the second service data based on the first operator, and a data amount of the third service data is less than a data amount of the second service data.

9. The method according to claim 8, wherein the first operator is determined based on a model type and a model splitting point of the large model, or the first operator is determined by the second communication apparatus and the third communication apparatus based on a training algorithm.

10. The method according to claim 8 or 9, further comprising:
receiving third information sent by the first communication apparatus, wherein the third information comprises an initial operator, the third information indicates the second communication apparatus to train the initial operator, the initial operator is used to compress service data transmitted by the second communication apparatus to another communication apparatus, and the first operator is obtained based on training of the initial operator.

11. The method according to any one of claims 8 to 10, wherein that the data amount of the third service data is less than the data amount of the second service data comprises: the second service data comprises information about M neurons, the third service data comprises information about N neurons, the N neurons are part of the M neurons, and N is a positive integer less than M.

12. The method according to any one of claims 8 to 11, further comprising:
receiving fifth information sent by the first communication apparatus, wherein the fifth information indicates a third operator, the third operator is used to compress the service data transmitted by the second communication apparatus to the another communication apparatus, a compression ratio of the third operator is different from that of the first operator, and a change value in a data transmission rate between the second communication apparatus and the third communication apparatus is greater than or equal to a preset threshold.

13. The method according to any one of claims 8 to 12, further comprising:
receiving seventh information sent by the first communication apparatus, wherein the seventh information comprises first parameter information of the large model; and
loading the first sub-neural network model of the large model based on the first parameter information.

14. The method according to any one of claims 8 to 13, wherein the first service data is a service request sent by a terminal device, and a response to the first service data is obtained based on processing of the third service data by using the second sub-neural network model.

15. A communication method, applied to a third communication apparatus in a mobile communication network, wherein a second sub-neural network model of the large model is deployed on the third communication apparatus, and the method comprises:
receiving second information sent by a first communication apparatus in the mobile communication network, wherein the second information indicates a second operator;
receiving third service data sent by a second communication apparatus in the mobile communication network, wherein a first sub-neural network model of the large model is deployed on the second communication apparatus; and
inputting fourth service data into the second sub-neural network model for processing to obtain fifth service data, and sending the fifth service data, wherein the fourth service data is obtained by decompressing the third service data based on the second operator, and a data amount of the third service data is less than a data amount of the fourth service data.

16. The method according to claim 15, wherein the second operator is determined based on a model type and a model splitting point of the large model, or the second operator is determined by the first communication apparatus and the second communication apparatus based on a training algorithm.

17. The method according to claim 15 or 16, further comprising:
receiving fourth information sent by the first communication apparatus, wherein the fourth information comprises a loss function, a first operator of the second communication apparatus is obtained based on training of the loss function, and the first operator is used to compress service data transmitted by the second communication apparatus to another communication apparatus.

18. The method according to any one of claims 15 to 17, wherein that the data amount of the third service data is less than the data amount of the fourth service data comprises: the third service data comprises information about N neurons, the fourth service data comprises information about K neurons, the N neurons are part of the K neurons, and N is a positive integer less than K.

19. The method according to any one of claims 15 to 18, further comprising:
receiving sixth information sent by the first communication apparatus, wherein the sixth information indicates a fourth operator, and the fourth operator is used to decompress service data compressed by using a third operator.

20. The method according to any one of claims 15 to 19, further comprising:
receiving eighth information sent by the first communication apparatus, wherein the eighth information comprises second parameter information of the large model; and
loading the second sub-neural network model of the large model based on the second parameter information.

21. The method according to any one of claims 15 to 20, wherein sending the fifth service data comprises:
sending the fifth service data to a terminal side apparatus, wherein the fifth service data is a response to a service request initiated by the terminal side apparatus.

22. A communication apparatus, comprising a module or a unit configured to perform the method according to any one of claims 1 to 21.

23. A communication apparatus, comprising a processor, wherein the processor is configured to implement the method according to any one of claims 1 to 21 by using a logic circuit or by executing code instructions.

24. A computer-readable storage medium, wherein the storage medium stores a computer program or instructions, and when the computer program or the instructions are executed by a communication apparatus, the method according to any one of claims 1 to 21 is implemented.

25. A computer program, wherein the computer program comprises instructions, and when the computer program is executed by a communication apparatus, the method according to any one of claims 1 to 21 is implemented.

26. A chip system, wherein the chip system comprises a processor, configured to support a device in implementing a function related to the method according to any one of claims 1 to 21.

27. A mobile communication system, wherein the mobile communication system comprises a first communication apparatus, a second communication apparatus, and a third communication apparatus, wherein the first communication apparatus is configured to perform the method according to any one of claims 1 to 7, the second communication apparatus is configured to perform the method according to any one of claims 8 to 14, and the third communication apparatus is configured to perform the method according to any one of claims 15 to 21.
